# EUROPEAN PATENT APPLICATION

(11) **EP 4 443 567 A1**
(43) Date of publication of application: **09.10.2024**
(21) Application number: 22901686.0
(22) Date of filing: 25.11.2022
(51) Int. Cl.: H01M 8/008, H01M 8/1004, H01M 8/1039, H01M 4/92, H01M 4/88, B01J 8/00, H01M 8/1069, C08J 3/09, H01M 8/10

(54) **METHOD FOR RECOVERING IONOMER AND CATALYST FROM MEMBRANE ELECTRODE ASSEMBLY OR ION EXCHANGE MEMBRANE**

(30) Priority: 01.12.2021 KR 20210169896; 01.12.2021 KR 20210169897; 19.01.2022 KR 20220007931; 25.07.2022 KR 20220091907
(71) Applicant: Dankook University Cheonan Campus Industry Academic Corporation Foundation, Cheonan-si, Chungcheongnam-do 31116 (KR)
(72) Inventor: LEE, Chang Hyun, Seongnam-si Gyeonggi-do 13589 (KR); AHN, Ju Hee, Cheonan-si, Chungcheongnam-do 31066 (KR)
(74) Representative: Vossius & Partner Patentanwälte Rechtsanwälte mbB
(86) International application number: PCT/KR2022/018800
(87) International publication number: WO 2023/101328

(57) **Abstract**

The present invention relates to a method for recovering an ionomer or catalyst from a used or defective membrane electrode assembly or ion exchange membrane, the method comprising the steps of: subjecting the membrane electrode assembly or ion exchange membrane to supercritical dispersion in a mixed solvent of alcohol and water to extract the ionomer; filtering and separating the extracted ionomer dispersion liquid; and filtering and separating the catalyst from the remaining components after the separation of the ionomer dispersion liquid.

## Description

### [Technical Field]

The present invention relates to a method for recovering an ionomer or catalyst from a used or defective membrane electrode assembly or ion exchange membrane and a method for recycling the recovered material.

### [Background Art]

A membrane electrode assembly (MEA) includes an ion exchange membrane, an electrode binder, and a catalyst, and is used in various electrochemical conversion processes such as fuel cells, water electrolysis, and reverse electrodialysis. The ion exchange membrane and the electrode binder are made of an ionomer with high ion conductivity and excellent chemical stability from the viewpoint of productivity and economy. For example, the ion exchange membrane is being developed in the form of a separator with sulfonic acid groups as ion exchangers that can secure ionic conductivity, and a reinforced composite membrane impregnated with perfluorine/partial fluorine/hydrocarbon based proton conductive ionomer on a porous support with excellent chemical durability is generally used.

Commercially available perfluorine-based ion exchange membranes include Gore Select membrane from W.L. Gore & Associates, Nafion membrane from Chemours, Aciplex membrane from Asahi Kasei, Flemion membrane from Asahi Glass, and the like.

In addition, in the case of an electrode catalyst constituting the membrane electrode assembly, rare metals capable of inducing high activity are being used and are being developed in the form of carbon-supported catalysts using expensive metals such as Pt/C and Ir/C. A representative commercially available example includes ElectroCatalyst from Tanaka, HiSPEC from Alfa Aesar, and the like.

Materials such as the ion exchange membrane, electrode binder, and catalyst included in the membrane electrode assembly are key materials that determine the electrochemical performance and durability of a fuel cell or water electrolysis device, and are currently produced only by a few specific overseas companies, and are very expensive, which puts a burden on the production of products using the materials.

In addition, since there is almost no technology for recovering ionomers or catalysts from the ion exchange membrane or membrane electrode assembly, the membrane electrode assembly or ion exchange membrane, which is widely used in the fuel cell or water electrolysis device, is entirely discarded after use, and even defective products generated during the manufacturing process cannot help but be discarded.

For example, perfluorine-based reinforced composite membranes may be produced as defective products that do not meet normal product standards due to reasons such as partial impregnation of ionomer, control failure of membrane thickness, control failure of drying/heat treatment process during the production process. Also, although there is no problem with the quality, there may be unused products due to the difference between the manufacturer's production standard and the consumer's use standard, but recycling is not achieved.

Similarly, useful components cannot be recovered even when a defective product is produced during the manufacturing process of a membrane electrode assembly. Methods for forming an electrode catalyst layer on the polymer electrolyte membrane for the manufacture of the membrane electrode assembly include spray coating, screen printing, brushing, tape casting, decal process, etc. In the case of defective products generated by reasons such as incomplete coating of electrodes, physical folding of polymer electrolyte membranes, etc. during the manufacturing process of the membrane electrode assembly, even if each component of the membrane electrode assembly is sufficiently usable and undamaged, a technology capable of recovering the ionomer or catalyst without damage has not been developed.

In this way, waste ion exchange membranes or closed membrane electrode assemblies, or ion exchange membranes or membrane electrode assemblies that are not utilized after being determined to be defective in the manufacturing process are often left untreated without being treated in a timely manner due to disposal costs, etc. Contamination also remains a challenge to be addressed. In particular, when a traditional thermochemical decomposition reaction is applied to recover a metal catalyst from an electrode material, a new treatment method is required because environmental problems related to hydrofluoric acid (HF) occur.

### [Disclosure]

### [Technical Problem]

An object of the present invention is to provide a method for recovering and recycling a useful material from the used membrane electrode assembly that is currently discarded or the defective membrane electrode assembly that cannot be commercially available due to defects found during the production process.

Another object of the present invention is to provide a method for selectively separating and recovering an ionomer and a catalyst without damage through a supercritical dispersion method from a membrane electrode assembly used in a fuel cell or water electrolysis device.

Another object of the present invention is to provide a method for selectively separating and recovering an ionomer and a catalyst from defective products that are not used due to defects occurring during the production process of a membrane electrode assembly.

Another object of the present invention is to reduce the dependence on imports of electrode materials and lower the manufacturing cost by preparing an ion exchange membrane or an electrode binder using the ionomer dispersion liquid recovered from a used membrane electrode assembly or a defective membrane electrode assembly.

Another object of the present invention is to recover and recycle an electrode material such as an ionomer and a catalyst from a membrane electrode assembly, thereby alleviating environmental problems caused by the disposal of used membrane electrode assemblies or membrane electrode assemblies determined to be defective. In addition, it is to provide an eco-friendly catalyst recovery method that can solve the environmental pollution problem that occurs when a noble metal catalyst is recovered from a membrane electrode assembly through a thermochemical decomposition reaction.

An object of the present invention is to provide a method for selectively extracting only ionomers without damage through a supercritical dispersion method from an ion exchange membrane that has already been used, for example, an ion conductive waste separator used in a fuel cell or water electrolysis device, and recovering the extracted isomers as dispersion liquid.

Another object of the present invention is to provide a method for selectively extracting only ionomers from defective ion exchange membranes generated during a production process or unused ion exchange membranes due to specification differences through a supercritical dispersion method without damage and recovering the extracted ionomers as dispersion liquid.

Another object of the present invention is to reduce the dependence on imports of electrode materials and lower a manufacturing cost by re-manufacturing an ion exchange membrane or an electrode binder using the ionomer dispersion liquid recovered from a used ion exchange membrane or a defective ion exchange membrane.

Another object of the present invention is to reduce a manufacturing cost of an ion exchange membrane and electrode binder by recovering and recycling ionomers from a used ion exchange membrane or defective ion exchange membrane, and to alleviate environmental problems caused by the disposal of a separator.

### [Technical Solution]

One aspect of the present invention provides a method for recovering an ionomer and a catalyst from a membrane electrode assembly, comprising the steps of a1) subjecting a membrane electrode assembly to supercritical dispersion in a mixed solvent of alcohol and water to extract an ionomer; a2) filtering and separating the extracted ionomer dispersion liquid; and a3) filtering and separating a catalyst from remaining components after the separation of the ionomer dispersion liquid.

The membrane electrode assembly may be a used membrane electrode assembly or a defective membrane electrode assembly. The used membrane electrode assembly may be, for example, the membrane electrode assembly that has been used in a fuel cell or a water electrolysis device, or the membrane electrode assembly that has been used in any product, device, or device without limitation. In addition, the used membrane electrode assembly may be not limited whether it is a membrane electrode assembly that has been used for a short period of time or a membrane electrode assembly that has been used for a long period of time.

In addition, as for the defective membrane electrode assembly, any product that has not been determined as a normal product for any reason during the production process can be used without particular limitation. For example, a membrane electrode assembly that has not been commercialized due to incomplete application of electrodes or folding of a polymer electrolyte membrane may be used.

In the supercritical dispersion, a temperature may be in a range of 100 to 350 °C, and a pressure may be in a range of 1 to 17.0 MPa.

The membrane electrode assembly may include a catalyst layer including an electrode binder and a catalyst formed on both sides of a separator having ion conductivity.

The ionomer extracted from the membrane electrode assembly may be at least one selected from a perfluorine-based ionomer, a partial fluorine-based ionomer, and a hydrocarbon-based ionomer, but is not limited thereto.

The catalyst may be at least one selected from a metal catalyst, a metal oxide catalyst, a multi-component alloy catalyst, and a metal catalyst supported on a support, but is not limited thereto.

The separated ionomer dispersion liquid may include an oxidation stabilizer.

The alcohol used for supercritical dispersion of the membrane electrode assembly may be at least one selected from the group consisting of methanol, ethanol, 1-propanol, isopropyl alcohol, butanol, isobutanol, 2-butanol, tert-butanol, n-pentanol, isopentyl alcohol, 2-methyl-1-butanol, neopentyl alcohol, diethyl carbinol, methyl propyl carbinol, methyl isopropyl carbinol, dimethyl ethyl carbinol, 1-hexanol, 2-hexanol, 3-hexanol, 2-methyl-1-pentanol, 3-methyl-1-pentanol, 4-methyl-1-pentanol, 2-methyl-2-pentanol, 3-methyl-2-pentanol, 4-methyl-2-pentanol, 2-methyl-3-pentanol, 3-methyl-3-pentanol, 2,2-dimethyl-1-butanol, 2,3-dimethyl-1-butanol, 2,3-dimethyl-2-butanol, 3,3-dimethyl-1-butanol, 2-ethyl-1-butanol, 1-heptanol, 2-heptanol, 3-heptanol and 4-heptanol, but is not particularly limited thereto.

According to an embodiment, the method for recovering the ionomer and the catalyst from the membrane electrode assembly may further comprise the step of treating the membrane electrode assembly with acid before the step a1) to remove impurity or treating the ionomer with acid after the step a2) to remove impurity.

Another aspect of the present invention provides a method for recovering an ionomer from an ion exchange membrane, comprising the steps of b1) subjecting an ion exchange membrane to supercritical dispersion in a mixed solvent of alcohol and water to extract an ionomer; and b2) filtering and separating the extracted ionomer dispersion liquid.

The ion exchange membrane may be a used ion exchange membrane or a defective ion exchange membrane. The used ion exchange membrane may be the ion exchange membrane that has been used in a fuel cell or a water electrolysis device, or the ion exchange membrane that has been used in any product, device, or device without limitation. In addition, the used ion exchange membrane may be not limited whether it is an ion exchange membrane that has been used for a short period of time or an ion exchange membrane that has been used for a long period of time.

In addition, as for the defective ion exchange membrane, any product that has not been determined as a normal product for any reason during a production process may be used without particular limitation. For example, the defective ion exchange membrane may be a product that has been determined to be defective due to partial impregnation of the ionomer or failure to control film thickness or failure to control drying and heat treatment processes during a production process, but is not particularly limited thereto.

In the supercritical dispersion of the method for recovering the ionomer from the ion exchange membrane, a temperature may be in a range of 100 to 350 °C, and a pressure may be in a range of 1 to 17.0 MPa.

In addition, the ionomer extracted and recovered from the ion exchange membrane may be at least one selected from a perfluorine-based ionomer, a partial fluorine-based ionomer, and a hydrocarbon-based ionomer, but is not limited thereto.

The ionomer dispersion liquid may include an oxidation stabilizer.

The alcohol used for supercritical dispersion of the ion exchange membrane may be at least one selected from the group consisting of methanol, ethanol, 1-propanol, isopropyl alcohol, butanol, isobutanol, 2-butanol, tert-butanol, n-pentanol, isopentyl alcohol, 2-methyl-1-butanol, neopentyl alcohol, diethyl carbinol, methyl propyl carbinol, methyl isopropyl carbinol, dimethyl ethyl carbinol, 1-hexanol, 2-hexanol, 3-hexanol, 2-methyl-1-pentanol, 3-methyl-1-pentanol, 4-methyl-1-pentanol, 2-methyl-2-pentanol, 3-methyl-2-pentanol, 4-methyl-2-pentanol, 2-methyl-3-pentanol, 3-methyl-3-pentanol, 2,2-dimethyl-1-butanol, 2,3-dimethyl-1-butanol, 2,3-dimethyl-2-butanol, 3,3-dimethyl-1-butanol, 2-ethyl-1-butanol, 1-heptanol, 2-heptanol, 3-heptanol and 4-heptanol, but is not particularly limited thereto.

In addition, one aspect of the present invention, the method for recovering the ionomer from the ion exchange membrane may further comprise the step of treating the ion exchange membrane with acid before the step b1) to remove impurity or treating the ionomer with acid after the step b2) to remove impurity.

According to another aspect of the present invention, an ion exchange membrane manufactured using the ionomer recovered from the membrane electrode assembly or ion exchange membrane by the above method is provided.

According to another aspect of the present invention, an electrode binder manufactured using the ionomer recovered from the membrane electrode assembly or ion exchange membrane by the above method is provided.

According to another aspect of the present invention, a membrane electrode assembly manufactured using the catalyst recovered from the membrane electrode assembly by the above method is provided.

According to another aspect of the present invention, a membrane electrode assembly manufactured using the ionomer recovered from the membrane electrode assembly or ion exchange membrane by the above method is provided.

### [Advantageous Effects]

According to the present invention, it is possible to recover and recycle useful electrode materials from used membrane electrode assemblies or ion exchange membranes that have been discarded and defective membrane electrode assemblies or ion exchange membranes generated during the production process. The supercritical dispersion method can be used to selectively separate the ionomer and catalyst from the membrane electrode assembly or ion exchange membrane without loss, and the separated ionomer and catalyst can be used again in electrode manufacturing according to the required use, such as an ion exchange membrane or an electrode binder.

Through embodiments, an ion exchange membrane was prepared using the ionomer dispersion liquid recovered from the membrane electrode assembly, and as a result of testing this, it was confirmed that proton conductivity and hydrogen gas barrier property were high without degradation of performance. In addition, as a result of re-manufacturing and evaluating the membrane electrode assembly using the ion exchange membrane, electrode binder, or carbon-supported catalyst manufactured using the ionomer recovered through the supercritical dispersion method according to the present invention, it was confirmed that the electrochemical properties were also improved.

The ionomer recovered according to the present invention exhibits excellent properties as an ion exchange membrane and electrode binder through the unique dispersion characteristics obtained through the supercritical dispersion process, and when it is introduced as an ion exchange membrane and electrode binder, the electrochemical performance of fuel cells or water electrolysis devices can be improved. In addition, if the supercritical dispersion method is applied according to the present invention, the existing catalyst recovery process through thermochemical decomposition can be drastically simplified. Also, not only can it solve environmental problems related to hydrofluoric acid (HF), but it can also secure the same level of electrochemical performance as that of commercially available catalysts.

In addition, the present invention is very useful in that the ionomer and catalyst materials can be selectively recovered from the membrane electrode assembly without loss, and has a very high utilization in that the state of the dispersion liquid can be adjusted to suit the required use, such as an ion exchange membrane and an electrode binder.

In addition, through the ionomer recovery technology, it is possible to alleviate the supply and demand issue of perfluorine-based ionomer materials, and it is possible to save manufacturing cost by manufacturing ion exchange membranes and electrode binders through the ionomer recovery without a separate synthesis process, and it is possible to prevent environmental problems caused by the waste generated through the disposal of the entire amount of the ionomer.

In addition, the ion exchange membrane, electrode binder, and catalyst manufactured using the recovered ionomer according to the present invention may be applied to a variety of industrial fields such as a polymer electrolyte water electrolysis, a reverse electrodialysis, a water treatment, an oxidation-reduction flow battery, a capacitive deionization, in addition to a polymer electrolyte fuel cell.

However, the effects of the invention are not limited to the effects mentioned above.

### [Description of Drawings]

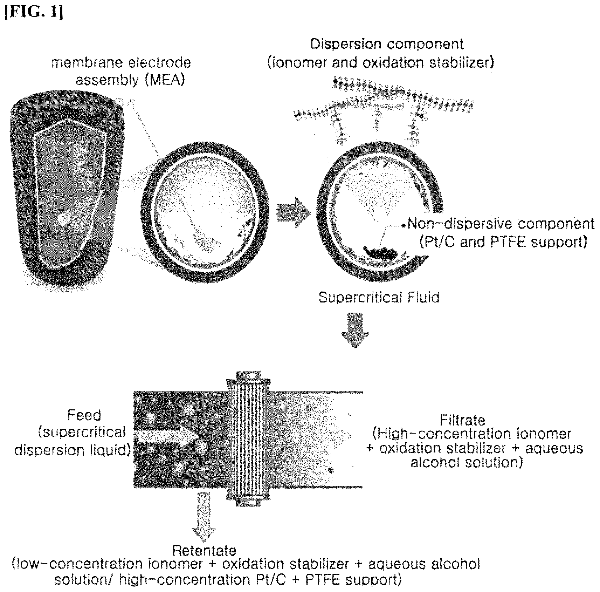

FIG. 1 is a schematic diagram showing a process of separating an electrode material using a supercritical dispersion method according to the present invention.
FIG. 2 is a graph showing proton conduction behavior of ion exchange membranes prepared according to Examples and Comparative Examples of the present invention.
FIG. 3 is a graph showing hydrogen gas permeation behavior of ion exchange membranes manufactured according to Example and Comparative Example of the present invention.
FIG. 4 is a graph showing current-voltage curves of membrane electrode assemblies to which ion exchange membranes manufactured according to Examples and Comparative Examples of the present invention are introduced at 65 °C.
FIG. 5 is a graph showing current-voltage curves of membrane electrode assemblies to which ionomers manufactured according to Examples and Comparative Examples of the present invention are applied as binders at 65 °C.
FIG. 6 is a graph showing current-voltage curves of membrane electrode assemblies to which carbon-supported catalysts prepared according to Examples and Comparative Examples of the present invention are applied at 65 °C.
FIG. 7 is a graph showing current-voltage curves of membrane electrode assemblies to which ion exchange membranes manufactured according to Examples and Comparative Examples of the present invention are introduced at 65 °C.
FIG. 8 is a graph showing current-voltage curves of membrane electrode assemblies to which ionomers manufactured according to Examples and Comparative Examples of the present invention are applied as binders at 65 °C.
FIG. 9 is a graph showing current-voltage curves of membrane electrode assemblies to which carbon-supported catalysts prepared according to Examples and Comparative Examples of the present invention are applied at 65 °C.
FIG. 10 is a graph showing proton conduction behavior of ion exchange membranes manufactured according to Examples and Comparative Examples of the present invention.
FIG. 11 is a graph showing hydrogen gas permeation behavior of ion exchange membranes manufactured according to Examples and Comparative Examples of the present invention.
FIG. 12 is a graph showing current-voltage curves of membrane electrode assemblies to which ion exchange membranes manufactured according to Examples and Comparative Examples of the present invention are introduced at 65 °C.
FIG. 13 is a graph showing current-voltage curves of membrane electrode assemblies to which ionomers manufactured according to Examples and Comparative Examples of the present invention are applied as binders at 65 °C.
FIG. 14 is a graph showing current-voltage curves of membrane electrode assemblies to which ion exchange membranes manufactured according to Examples and Comparative Examples of the present invention are introduced at 65 °C.
FIG. 15 is a graph showing current-voltage curves of membrane electrode assemblies to which ionomers manufactured according to Examples and Comparative Examples of the present invention are applied as binders at 65 °C.

### [Mode for Invention]

Hereinafter, the present invention will be described in more detail with reference to Examples and drawings. However, the following Examples are provided by way of example to aid understanding of the present invention, and the scope of the present invention is not limited thereto. It should be understood that the present invention can be modified and implemented in many different forms, and includes all modifications, equivalents, and substitutes included in the spirit and scope of the present invention.

Except that they are not differently defined, all terms used in the present invention including technical or scientific terms have the same meanings with terms that are generally understood by those skilled in the art related to the field of the present invention. The terms same as those of which are defined in a general dictionary should be understood that the terms have meanings same as contextual meanings of the related art. And, as long as the terms are not definitely defined in the present invention, the terms are not interpreted as ideal or excessively formal meanings.

### <Method for recovering an ionomer and a catalyst from a membrane electrode assembly (MEA)>

An embodiment provides a method for recovering ionomers and catalysts from used membrane electrode assemblies or defective membrane electrode assemblies. Specifically, an embodiment relates to a method for selectively extracting ionomers and catalysts, which are useful materials, from membrane electrode assemblies that are discarded after being used for a long period of time for fuel cells, water electrolysis, or salt water electrolysis, or defective membrane electrode assemblies that cannot be commercialized due to defects found during the manufacturing process, and recovering the extracted ionomers and catalysts as dispersion liquid, and an ion exchange membrane, electrode binder or membrane electrode assembly manufactured using the recovered ionomer dispersion liquid and catalyst.

A method for recovering an ionomer and a catalyst from a membrane electrode assembly may comprise the steps of a1) subjecting a membrane electrode assembly to supercritical dispersion in a mixed solvent of alcohol and water to extract an ionomer; a2) filtering and separating the extracted ionomer dispersion liquid; and a3) filtering and separating a catalyst from remaining components after the separation of the ionomer dispersion liquid.

The membrane electrode assembly may be a used membrane electrode assembly or a defective membrane electrode assembly. The used membrane electrode assembly may be, for example, the membrane electrode assembly that has been used in a fuel cell or a water electrolysis device, or the membrane electrode assembly that has been used in any product, device, or device without limitation. In addition, the used membrane electrode assembly is not limited whether it is a membrane electrode assembly that has been used for a short period of time or a membrane electrode assembly that has been used for a long period of time.

In addition, as for the defective membrane electrode assembly, any product that has not been determined as a normal product for any reason during the production process can be used without particular limitation. For example, a membrane electrode assembly that has not been commercialized due to incomplete application of electrodes or folding of a polymer electrolyte membrane may be used.

The membrane electrode assembly generally has a catalyst layer made of an electrode binder and a catalyst formed on both sides of a separator containing an ion conductive functional group.

The separator included in the membrane electrode assembly may be a polymer electrolyte membrane made of pure ionomers or a polymer electrolyte reinforced composite membrane made of support fibers and ionomers. In the present invention, the ionomer is separated into a dispersion liquid using an aqueous alcohol solution through the supercritical dispersion method. In this case, since the support fibers such as PTFE constituting the reinforced composite membrane are not dispersed in the ionomer dispersion liquid, separation may be performed in a kind of aggregated state.

Among the ionomers constituting the separator included in the membrane electrode assembly, any perfluorine-based ionomer, partial fluorine-based ionomer, or hydrocarbon-based ionomer can be extracted without limitation, and can be separated by dispersing in an aqueous alcohol solution by a supercritical dispersion method.

Specifically, types of perfluorine-based ionomers include poly(perfluorosulfonic acid), poly(perfluorocarboxylic acid), a copolymer of tetrafluoroethylene and fluorovinyl ether containing a sulfonic acid group, and a mixture thereof, and commercially available products include commercially available Nafion, Flemion, Aciplex, 3M ionomer, Dow ionomer, Solvay ionomer, Sumitomo ionomer, and a mixture thereof, but are not particularly limited thereto.

In addition, examples of partial fluorine-based ionomer include sulfonated poly(arylene ethersulfone-co-vinylidene fluoride), sulfonated trifluorostyrene-grafted-poly(tetrafluoroethylene) (PTFE-g-TFS), styrene-grafted sulfonated polyvinylidene fluoride (PVDF-g-PSSA), a copolymer containing dicarfluorobiphenyl as a monomer, a copolymer containing hexafluorobenzene as a monomer, and a mixture thereof, but are not particularly limited thereto.

Meanwhile, examples of the hydrocarbon-based ionomer include homopolymers, alternating copolymers, random copolymers, block copolymers, multiblock copolymers and graft copolymers comprising at least one hydrocarbon selected from sulfonated imide, sulfonated aryl ether sulfone, sulfonated ether ether ketone, sulfonated benzimidazole, sulfonated sulfone, sulfonated styrene, sulfonated phosphazene, sulfonated ether ether sulfone, sulfonated ether sulfone, sulfonated ether benzimidazole, sulfonated arylene ether ketone, sulfonated ether ketone, sulfonated styrene, sulfonated imidazole, sulfonated ether ketone ketones, aryl ether benzimidazole, and a combinations thereof, and a mixture thereof, but are not particularly limited thereto.

In addition, even when the separator constituting the used or defective membrane electrode assembly used in the present invention is a reinforced composite membrane including a support, the electrode material can be separated. Examples of the support constituting the reinforced composite film may include polyterafluoroethylene, polyvinyldifluoroethylene, polyethylene, polypropylene, polyethylene terephthalate, polyimide and polyamide. A reinforced composite membrane impregnated with a perfluorine-based ionomer into the porous support made of such a polymer has high process efficiency, low hydrogen permeability, and improved mechanical strength and proton conductivity, and is widely used.

Although a separate pretreatment is not necessarily required before extracting the ionomer from the membrane electrode assembly, in the case of using a membrane electrode assembly that has been used in a fuel cell or water electrolysis device, an acid treatment process is preferably required to remove impurities that may be contaminated during long-term operation in advance. In addition, in the case of using defective membrane electrode assemblies or closed membrane electrode assemblies that have been neglected for a long time, it is preferable to perform an acid treatment process in advance to remove impurities in the membrane electrode assemblies that may be contaminated due to an inadequate storage environment.

According to an embodiment, the method for recovering the ionomer and the catalyst from the membrane electrode assembly may further comprise the step of treating membrane electrode assembly with acid before step a1) to remove impurities or treating the ionomer with acid after step a2) to remove impurities.

In other words, the step of treating the membrane electrode assembly with acid to remove impurities may be comprised before the step of dispersing the membrane electrode assembly in a solvent. It is also possible to perform the acid treatment process after extracting the ionomer from the membrane electrode assembly by using a supercritical dispersion method without treating the membrane electrode assembly with acid before extracting the ionomer. The method may further comprise the step of cooling and separating the dispersion liquid in which the ionomer is extracted from the membrane electrode assembly under supercritical condition, and then treating the cooled and separated dispersion liquid with acid to remove impurities.

The acid treatment process is performed for the purpose of converting the terminal functional group of the perfluorine-based ionomer in the ion exchange membrane from a salt state such as sodium salt (SO₃⁻Na⁺) to an acid (SO₃⁻H⁺) form capable of proton transfer. In this case, the type of acid that can be used is not particularly limited, and it is appropriate to use one of strong acids such as sulfuric acid (H₂SO₄), nitric acid (HNO₃), phosphoric acid (H₃PO₄), and hydrochloric acid (HCl). The concentration of the acid is suitably in the range of 0.1 to 10 M. If the concentration of the acid is less than 0.1 M, complete conversion to the acid (SO₃⁻H⁺) form may not occur, and if the concentration of the acid exceeds 10 M, since the acid may be introduced in excess of the amount of acid that can be converted to the acid (SO₃⁻H⁺) form, it is undesirable from an economic point of view.

In the case of removing impurities by treating the membrane electrode assembly with the acid before extracting the ionomer from the used or defective membrane electrode assembly, for example, the membrane electrode assembly is treated with boiling acid for 0.5 to 6 hours. Afterwards, it is more preferable to boil the ion exchange membrane in ultrapure water for 0.5 to 6 hours in order to remove excessive acid residues on the surface of the ion exchange membrane.

In the case of removing impurities after extracting the ionomer from the used membrane electrode assembly or defective membrane electrode assembly through the supercritical dispersion method, for example, the filtered ionomer dispersion liquid is placed in an ion exchange resin pack. After the pack is placed in a boiling sulfuric acid solution having a constant concentration in the range of 0.1 to 10 M for 0.5 to 6 hours to induce ion exchange, it is continuously stirred in boiling water for 0.5 to 6 hours. As another method, after solidifying the filtered ionomer dispersion liquid, impurities may be removed by the same process as the method of treating the membrane electrode assembly with the acid before extracting the ionomer.

The process of extracting the ionomer from the used membrane electrode assembly or the defective membrane electrode assembly as the dispersion liquid using the supercritical dispersion method is as follows. Supercritical fluid above the critical point is characterized by liquid-like solvency, very low surface tension, and gas-like permeability, and the density of the supercritical fluid has the advantage of improving dissolution performance. Since the solute has a low viscosity in a supercritical fluid, mass transfer can be promoted, and thus the ionomer can exhibit high solute diffusivity.

The solubility of these specific solutes can be further improved by introducing mixed solvents. In an embodiment, alcohol and water were used as a co-solvent to improve the polarity and solvation strength of the supercritical fluid through the formation of hydrogen bonds.

The alcohol usable in extracting the ionomer from the membrane electrode assembly may include, for example, methanol, ethanol, 1-propanol, isopropyl alcohol, butanol, isobutanol, 2-butanol, tert-butanol, n-pentanol, isopentyl alcohol, 2-methyl-1-butanol, neopentyl alcohol, diethyl carbinol, methyl propyl carbinol, methyl isopropyl carbinol, dimethyl ethyl carbinol, 1-hexanol, 2-hexanol, 3-hexanol, 2-methyl-1-pentanol, 3-methyl-1-pentanol, 4-methyl-1-pentanol, 2-methyl-2-pentanol, 3-methyl-2-pentanol, 4-methyl-2-pentanol, 2-methyl-3-pentanol, 3-methyl-3-pentanol, 2,2-dimethyl-1-butanol, 2,3-dimethyl-1-butanol, 2,3-dimethyl-2-butanol, 3,3-dimethyl-1-butanol, 2-ethyl-1-butanol, 1-heptanol, 2-heptanol, 3-heptanol and 4-heptanol, and a mixture thereof, but is not particularly limited thereto.

The temperature and pressure of the supercritical condition for recovering the ionomer from the membrane electrode assembly are in the range of 100 to 350 °C and in the range of 1 to 17.0 MPa. The temperature and pressure for extracting the ionomer in high concentration are preferably in the range of 130 to 350 °C, and in the range of 4 to 17.0 MPa. In the case where the temperature is less than 100 °C or the reaction pressure is less than 1 MPa, the recovered ionomer dispersion liquid is not partially dispersed and it is difficult to have uniform dispersion characteristics. On the contrary, in the case where the temperature exceeds 350 °C or the pressure exceeds 17.0 MPa, economic efficiency is low because high-temperature and high-pressure reaction conditions must be maintained. In the present invention, the specific temperature and pressure ranges for the supercritical dispersion of the ionomer may vary depending on the type and ratio of the ionomer to be recovered and alcohol, and since the concentration of the ionomer dispersion liquid can be adjusted according to the purpose of use, it has the advantage of very high utilization. The ionomer dispersion liquid supercritically dispersed according to the present invention exhibits unique dispersion characteristics, and can contribute to improving the electrochemical performance of a battery or water electrolysis device incorporating the ion exchange membrane and electrode binder manufactured according to the ionomer dispersion liquid.

The ionomer dispersion liquid extracted into the mixed solvent using the supercritical dispersion method is cooled and then filtered to separate support fibers and catalysts that are not dispersed in the aqueous alcohol solution. The ionomer dispersion liquid may be easily separated using a general filter paper, and it is preferable to use a paper filter paper having an average pore size of 0.45 to 10 µm. Other filters or separation devices other than a paper filter paper may be used, and there is no particular limitation. Meanwhile, the dispersion liquid that has passed through the filter paper or the filtering device is the dispersion liquid obtained by extracting the ionomer in the mixed solvent of alcohol and water, and may contain a small amount of water-soluble substances such as an oxidation stabilizer. Since additives such as oxidation stabilizers are components used for manufacturing ion exchange membranes or electrode binders, the ionomer dispersion liquid containing a small amount of water-soluble substances such as oxidation stabilizers can be used as it is for manufacturing ion exchange membranes or electrode binders.

The residue remaining after extracting and separating the ionomer dispersion liquid from the membrane electrode assembly contains support fibers, catalysts, and the like. In this case, since the support fiber is not decomposed by the supercritical dispersion method, it is separated with a 6 to 10 µm filter paper (No.100, HYUNDAI MICRO, KOREA).

The catalyst separated from the used or defective membrane electrode assembly may be one of a metal catalyst, a metal oxide catalyst, a multi-component alloy catalyst, a metal catalyst supported on a support, and a mixture thereof.

In a carbon-supported catalyst, metal is adsorbed on the surface of a carbon-based support. In this case, the carbon-based support includes carbon black, carbon nanotube, carbon nanofiber, carbon nanowire, carbon nanohorn, graphene, and the like, but is particularly limited thereto.

The metals of the carbon-supported catalyst include platinum (Pt), palladium (Pd), ruthenium (Ru), iridium (Ir), gold (Au), silver (Ag), chromium (Cr), manganese (Mn), iron (Fe), cobalt (Co), nickel (Ni), copper (Cu), molybdenum (Mo), yttrium (Y) or alloys thereof, but are not particularly limited thereto.

Among the carbon-supported catalysts, the most widely used catalyst for the membrane electrode assembly of a fuel cell, water electrolysis device, or the like is platinum (Pt/C), and examples of other catalysts include palladium, rhodium, and nickel. Compared to the other catalysts, the platinum (Pt/C) catalyst has the advantage of being the most cost-effective. According to an embodiment, when the catalyst included in the membrane electrode assembly is a carbon-supported catalyst, the ionomer dispersion liquid is separated through supercritical dispersion, and the recovered catalyst is also separated into a carbon-supported catalyst state, and can be used as an electrode catalyst material as it is. In other words, since the catalyst (Pt/C) can be simply separated from the membrane electrode assembly without deterioration in performance, it can be used as an electrode catalyst again, which is very useful.

A currently known method for recovering a metal catalyst is performed through a thermochemical decomposition reaction, and the problem of environmental pollution due to hydrofluoric acid (HF) generated at this time is also raised. Through the present invention, this traditional catalyst regeneration recovery process can be improved. In addition, in an embodiment, after recovering the catalyst in the form of a metal catalyst supported on a carbon support by using a supercritical dispersion method, only noble metals may be separated separately in connection with a catalyst regeneration process that has already been developed. Therefore, the technique of recovering the perfluorine-based ionomer and the carbon-supported catalyst from the used or defective membrane electrode assembly according to the present invention can be economical as well as highly useful from an environmental point of view.

In this way, the ionomer and catalyst can be selectively separated without loss from a used membrane electrode assembly or defective membrane electrode assembly using the supercritical dispersion method, and can be utilized as an electrode material for required purposes such as ion exchange membranes or electrode binders. As a result of evaluating the membrane electrode assembly that was manufactured using the ion exchange membrane or electrode binder and catalyst manufactured by using the ionomer recovered from a defective membrane electrode assembly through a supercritical dispersion method according to the present invention, it was confirmed that each property was improved without deterioration in electrochemical performance.

Since the ionomer dispersion liquid recovered from a used or defective membrane electrode assembly according to the present invention has no difference in performance and quality from a dispersion liquid manufactured by dispersing an ionomer or a commercially available ionomer dispersion liquid, an ion exchange membrane may be manufactured using a general membrane manufacturing method. For example, a perfluorine-based ionomer dispersion obtained from a membrane electrode assembly may be cast on a substrate, dried, and heat treated to manufacture an ion exchange membrane. Any conventional method for manufacturing a separator, such as adjusting the concentration of the dispersion liquid or mixing the dispersion liquid with other ionomer dispersion liquid, can be applied. Even when the ionomer dispersion liquid recovered from the membrane electrode assembly is used as an electrode binder, there is no particular limitation as in the case of using a commercially available ionomer dispersion liquid.

The ion exchange membrane manufactured using the ionomer dispersion liquid recovered from the membrane electrode assembly by the supercritical dispersion method according to an embodiment had excellent proton conductivity and hydrogen gas barrier property. Also, even when a membrane electrode assembly was manufactured by applying the ionomer dispersion liquid as an electrode binder, the performance of a unit cell was very excellent. Therefore, it can be confirmed that the ionomer can be extracted from the defective membrane electrode assembly during the process without loss of performance.

The ionomer recovered from a used or defective membrane electrode assembly according to an embodiment exhibits excellent properties as an ion exchange membrane and electrode binder through the unique dispersion characteristics obtained through the supercritical dispersion process. Also, the ionomer is introduced as an ion exchange membrane and electrode binder, the electrochemical performance of a fuel cell, water electrolysis device, or the like can be improved. In addition, the application of the supercritical dispersion method can drastically simplify the existing catalyst recovery process through thermochemical decomposition. In addition, it can solve environmental problems related to hydrofluoric acid (HF) and secure the same level of electrochemical performance as that of commercial catalysts.

In addition, unlike the conventional art in which the membrane and electrode of the membrane electrode assembly are separated and separately processed, the present invention utilizes a supercritical dispersion method without separating the membrane and electrode in the membrane electrode assembly to selectively extract only the ionomer without chemical loss, which can be a groundbreaking technology. In addition, in order to solve the problem that it is difficult to separate the ionomer from the membrane in a general extraction process and only a small amount of ionomer can be extracted from an electrode layer, supercritical conditions were applied to extract the ionomer included in the membrane and electrode at high concentration.

In addition, the present invention is very useful in that the state of the dispersion liquid can be adjusted to suit a required use, such as an ion exchange membrane and an electrode binder when extracting an ionomer from a used or defective membrane electrode assembly. In addition, through the ionomer recovery technology, it is possible to alleviate the supply and demand issue of perfluorine-based materials, and it is possible to save manufacturing cost by manufacturing ion exchange membranes and electrode binders through the ionomer recovery without a separate synthesis process. Also, the ionomer recovery technology can solve environmental pollution caused by waste generated through the disposal of the entire amount of the ionomer.

The ion exchange membranes, electrode binders, and catalyst materials manufactured using the ionomers recovered from a used or defective membrane electrode assembly according to the present invention may be applied to various industrial fields such as polymer electrolyte water electrolysis, water treatment requiring other ion-selective ionomers, oxidation-reduction flow batteries, and capacitive deionization fields, in addition to polymer electrolyte fuel cells.

### <Method for recovering ionomer from an ion exchange membrane>

An embodiment provides a method for recovering ionomers from used membrane electrode assemblies or defective membrane electrode assemblies. Specifically, an embodiment relates to a method for selectively extracting ionomers, which are useful materials, from membrane electrode assemblies that are discarded after being used for a long period of time for fuel cells, water electrolysis, or salt water electrolysis, or defective membrane electrode assemblies that cannot be commercialized due to defects found during the manufacturing process, and recovering the extracted ionomers as a dispersion liquid, and an ion exchange membrane, electrode binder or membrane electrode assembly manufactured using the recovered ionomer dispersion liquid.

According to an embodiment, a method for recovering an ionomer from an ion exchange membrane may comprise the steps of b1) subjecting an ion exchange membrane to supercritical dispersion in a mixed solvent of alcohol and water to extract an ionomer; and b2) filtering and separating the extracted ionomer dispersion liquid.

The ion exchange membrane may be a used ion exchange membrane or a defective ion exchange membrane. For example, the used ion exchange membrane may be the ion exchange membrane that has been used in a fuel cell or a water electrolysis device, or the ion exchange membrane that has been used in any product, device, or device without limitation. In addition, the used ion exchange membrane is not limited whether it is an ion exchange membrane that has been used for a short period of time or an ion exchange membrane that has been used for a long period of time.

In addition, as for the defective ion exchange membrane, any product that has not been determined as a normal product for any reason during a production process can be used without particular limitation. For example, the defective ion exchange membrane may be a product that has been determined to be defective due to partial impregnation of the ionomer or failure to control film thickness or failure to control drying and heat treatment processes during a production process, but is not particularly limited thereto.

In addition, the used or defective ion exchange membranes that can be used for ionomer extraction are not particularly limited in the type of ionomer or membrane structure. For example, as a perfluorine-based ion exchange membrane, either a single-layer membrane or a double-layer membrane can be used. Among them, a double-layer separator in which different functional groups form a layered structure is mainly used as the perfluorine-based ion exchange membranes for water electrolysis or brine electrolysis. For example, the double-layer separator has been developed and used in the form of a separator having a double-layer structure including a carboxylic acid layer using a carboxylic acid group as an ion exchange group and a sulfonic acid layer using a sulfonic acid group as an ion exchange group. Representative products include Asahi Kasei's Aciplex membrane, Asahi Glass' Flemion membrane, and the like. As such, the perfluorine-based double-layer separator is discarded as a separator after use, causing environmental problems.

In addition, an embodiment provides a method for utilizing a defective ion exchange membrane that is not commercialized due to defects found during a manufacturing process. Perfluorine-based separators, especially perfluorine-reinforced composite membranes widely used in fuel cells or water electrolysis devices, are often determined to be defective because they do not meet the standard for normal products due to reasons such as partial impregnation of ionomer, failure to control film thickness, and failure to control drying/heat treatment processes during the production process. In addition, even when there is no problem in quality, when manufacturing a membrane electrode assembly (MEA) with the reinforced composite membrane, there is a problem in that unused parts occur due to the difference between the production standard of the reinforced composite membrane manufacturer and the consumer use standard. In this way, abnormal products generated due to process control failure and unused products generated due to differences in manufacturing standards and usage standards in the process of manufacturing membrane electrode assemblies are left as they are or discarded as separators, causing environmental problems.

Therefore, the technique of recovering the perfluorine-based ionomer from a used or defective separator according to the present invention can be economical as well as highly useful from an environmental point of view.

An embodiment provides a method for selectively extracting a perfluorine-based ionomer from a used ion exchange membrane, a defective ion exchange membrane due to partial impregnation of the ionomer, failure to control a membrane thickness, failure to control a drying or heat treatment process, or an unused ion exchange membrane due to a difference in specification, and then recycling the extracted ionomer as an ion exchange membrane or an electrode binder again.

The used ion exchange membrane or defective ion exchange membrane that can be used for ionomer extraction can be a polymer electrolyte membrane composed of a pure ionomer without a support or a reinforced composite membrane including a support. Whether it is a commercially available ion exchange membrane or an ion exchange membrane directly manufactured using an ionomer, there is no particular limitation. In the present invention, the ionomer is separated as a dispersion liquid using an aqueous alcohol solution through the supercritical dispersion method. In this case, since support fibers such as PTFE constituting a reinforced composite membrane are not dispersed in the ionomer dispersion liquid, the support fibers may be separated in a kind of aggregated state.

Among the ionomers constituting the ion exchange membrane, any perfluorine-based ionomer, partial fluorine-based ionomer, or hydrocarbon-based ionomer can be extracted without limitation, and can be separated by dispersing in an aqueous alcohol solution by a supercritical dispersion method.

Specifically, examples of the ionomer constituting the perfluorine-based ion exchange membrane include poly(perfluorosulfonic acid), poly(perfluorocarboxylic acid), a copolymer of tetrafluoroethylene and fluorovinyl ether containing a sulfonic acid group, and a mixture thereof, and commercially available products include commercially available Nafion, Flemion, Aciplex, 3M ionomer, Dow ionomer, Solvay ionomer, Sumitomo ionomer, and a mixture thereof, but are not particularly limited thereto.

In addition, examples of partial fluorine-based ionomer include sulfonated poly(arylene ethersulfone-co-vinylidene fluoride), sulfonated trifluorostyrene-grafted-poly(tetrafluoroethylene) (PTFE-g-TFS), styrene-grafted sulfonated polyvinylidene fluoride (PVDF-g-PSSA), a copolymer containing dicarfluorobiphenyl as a monomer, a copolymer containing hexafluorobenzene as a monomer, and a mixture thereof, but are not particularly limited thereto.

Meanwhile, examples of the hydrocarbon-based ionomer include homopolymers, alternating copolymers, random copolymers, block copolymers, multiblock copolymers and graft copolymers comprising at least one hydrocarbon selected from sulfonated imide, sulfonated aryl ether sulfone, sulfonated ether ether ketone, sulfonated benzimidazole, sulfonated sulfone, sulfonated styrene, sulfonated phosphazene, sulfonated ether ether sulfone, sulfonated ether sulfone, sulfonated ether benzimidazole, sulfonated arylene ether ketone, sulfonated ether ketone, sulfonated styrene, sulfonated imidazole, sulfonated ether ketone ketones, aryl ether benzimidazole, and a combinations thereof, and a mixture thereof, but are not particularly limited thereto.

In addition, even when the used ion exchange membrane or defective ion exchange membrane determined to be defective that is used for the ionomer extraction is a reinforced composite membrane including a support, the ionomer can be extracted and used as an electrode material. Examples of the support constituting the reinforced composite film may include polyterafluoroethylene, polyvinyldifluoroethylene, polyethylene, polypropylene, polyethylene terephthalate, polyimide and polyamide. As such, the reinforced composite membrane impregnated with a perfluorine-based ionomer into a porous support has high process efficiency, low hydrogen permeability, and improved mechanical strength and proton conductivity, and is widely used.

On the other hand, separate pretreatment is not necessarily required before extracting the ionomer from the ion exchange membrane, but in the case of using a separator that has been used in a water electrolysis device or the like for a long time, it is preferable to perform an acid treatment process to remove impurities that may have been contaminated during long-term operation in advance. In addition, in the case of using a defective ion exchange membrane or a waste ion exchange membrane that has been neglected for a long time, it is preferable to perform an acid treatment process to remove impurities that may be contaminated due to an inadequate storage environment in advance.

According to an embodiment, the method for recovering the ionomer from the ion exchange membrane may further comprise the step of treating the ion exchange membrane with acid before the step b1) to remove impurities or treating the ionomer with acid after the step b2) to remove impurities.

In other words, the step of treating the ion exchange membrane with acid to remove impurities may be comprised before the step of dispersing the ion exchange membrane in a solvent. It is also possible to perform the acid treatment process after extracting the ionomer from the ion exchange membrane by using a supercritical dispersion method without treating the ion exchange membrane with acid before extracting the ionomer. The method may further comprise the step of cooling and separating the dispersion liquid in which the ionomer is extracted from the ion exchange membrane under supercritical condition, and then treating the cooled and separated dispersion liquid with acid to remove impurities.

The acid treatment process is performed for the purpose of converting the terminal functional group of the perfluorine-based ionomer in the ion exchange membrane from a salt state such as sodium salt (SO₃⁻Na⁺) to an acid (SO₃⁻H⁺) form capable of proton transfer. In this case, the type of acid that can be used is not particularly limited, and it is appropriate to use one of strong acids such as sulfuric acid (H₂SO₄), nitric acid (HNO₃), phosphoric acid (H₃PO₄), and hydrochloric acid (HCl). The concentration of the acid is suitably in the range of 0.1 to 10 M. If the concentration of the acid is less than 0.1 M, complete conversion to the acid (SO₃⁻H⁺) form may not occur, and if the concentration of the acid exceeds 10 M, since the acid may be introduced in excess of the amount of acid that can be converted to the acid (SO₃⁻H⁺) form, it is undesirable from an economic point of view. The acid treatment of the ion exchange membrane is generally performed by treating the acid in a boiling state for 30 minutes to 6 hours. Afterwards, it is more preferable to boil in ultrapure water again for 30 minutes to 6 hours in order to remove acid residues that may be excessively adhered to the surface of the ion exchange membrane.

In the case of removing impurities after extracting the ionomer from the used ion exchange membrane or defective membrane electrode assembly through the supercritical dispersion method, for example, the filtered ionomer dispersion liquid is placed in an ion exchange resin pack. After the pack is placed in a boiling sulfuric acid solution having a constant concentration in the range of 0.1 to 10 M for 0.5 to 6 hours to induce ion exchange, it is continuously stirred in boiling water for 0.5 to 6 hours. As another method, after solidifying the filtered ionomer dispersion liquid, impurities may be removed by the same process as the method of treating the ion exchange membrane with the acid before extracting the ionomer.

As described above, when the removal of impurities from the ion exchange membrane is completed, the ion exchange membrane is dispersed under supercritical conditions to extract the ionomer as the dispersion liquid.

Supercritical fluid above the critical point is characterized by liquid-like solvency, very low surface tension, and gas-like permeability, and the density of the supercritical fluid has the advantage of improving dissolution performance. Since the solute has a low viscosity in a supercritical fluid, mass transfer can be promoted, and thus the perfluorine-based ionomer can exhibit high solute diffusivity.

The solubility of these specific solutes can be further improved by introducing mixed solvents. In an embodiment of the present invention, alcohol and water were used as a co-solvent to improve the polarity and solvation strength of the supercritical fluid through the formation of hydrogen bonds.

The alcohol usable in extracting the ionomer from the ion exchange membrane may include, for example, methanol, ethanol, 1-propanol, isopropyl alcohol, butanol, isobutanol, 2-butanol, tert-butanol, n-pentanol, isopentyl alcohol, 2-methyl-1-butanol, neopentyl alcohol, diethyl carbinol, methyl propyl carbinol, methyl isopropyl carbinol, dimethyl ethyl carbinol, 1-hexanol, 2-hexanol, 3-hexanol, 2-methyl-1-pentanol, 3-methyl-1-pentanol, 4-methyl-1-pentanol, 2-methyl-2-pentanol, 3-methyl-2-pentanol, 4-methyl-2-pentanol, 2-methyl-3-pentanol, 3-methyl-3-pentanol, 2,2-dimethyl-1-butanol, 2,3-dimethyl-1-butanol, 2,3-dimethyl-2-butanol, 3,3-dimethyl-1-butanol, 2-ethyl-1-butanol, 1-heptanol, 2-heptanol, 3-heptanol and 4-heptanol, and a mixture thereof, but is not particularly limited thereto.

The temperature and pressure of the supercritical condition for recovering the ionomer from the ion exchange membrane are in the range of 100 to 350 °C and in the range of 1 to 17.0 MPa. The temperature and pressure for extracting the ionomer in high concentration are preferably in the range of 130 to 350 °C, and in the range of 4 to 17.0 MPa. In the case where the temperature is less than 100 °C or the reaction pressure is less than 1 MPa, the recovered ionomer dispersion liquid is not partially dispersed and it is difficult to have uniform dispersion characteristics. On the contrary, in the case where the temperature exceeds 350 °C or the pressure exceeds 17.0 MPa, economic efficiency is low because high-temperature and high-pressure reaction conditions must be maintained. In the present invention, the specific temperature and pressure ranges for the supercritical dispersion of the ionomer may vary depending on the type and ratio of the ionomer to be recovered and alcohol, and since the concentration of the ionomer dispersion liquid can be adjusted according to the purpose of use, it has the advantage of very high utilization. The ionomer dispersion liquid supercritically dispersed according to the present invention exhibits unique dispersion characteristics, and can contribute to improving the electrochemical performance of a battery or water electrolysis device incorporating the ion exchange membrane and electrode binder manufactured according to the ionomer dispersion liquid.

Meanwhile, the ionomer dispersion liquid extracted into the mixed solvent using the supercritical dispersion method is cooled and then filtered to be separate from support fibers. The ionomer dispersion liquid may be easily separated using a general filter paper, and it is preferable to use a paper filter paper having an average pore size of 0.45 to 10 µm. Other filters or separation devices other than a paper filter paper may be used, and there is no particular limitation. Meanwhile, the dispersion liquid that has passed through the filter paper or the filtering device is the dispersion liquid obtained by extracting the ionomer in the mixed solvent of alcohol and water, and may contain a small amount of water-soluble substances such as an oxidation stabilizer. Since additives such as oxidation stabilizers are components used for manufacturing ion exchange membranes or electrode binders, the ionomer dispersion liquid containing a small amount of water-soluble substances such as oxidation stabilizers can be used as it is for manufacturing ion exchange membranes or electrode binders.

Since the ionomer dispersion liquid obtained from a used or defective ion exchange membrane according to the present invention has no difference in performance and quality from a dispersion liquid manufactured by dispersing an ionomer or a commercially available ionomer dispersion liquid, an ion exchange membrane may be manufactured using a general membrane manufacturing method. For example, a perfluorine-based ionomer dispersion obtained from an ion exchange membrane according to an embodiment may be cast on a substrate, dried, and heat treated to manufacture an ion exchange membrane. Any conventional method for manufacturing a separator, such as adjusting the concentration of the dispersion liquid or mixing the dispersion liquid with other ionomer dispersion liquid, can be applied. Even when the perfluorine-based ionomer dispersion liquid recovered from a used or defective ion exchange membrane according to an embodiment is used as an electrode binder, there is no particular limitation as in the case of using a commercially available ionomer dispersion liquid.

Meanwhile, the ion exchange membrane manufactured using the ionomer dispersion liquid recovered from a used or defective ion exchange membrane by the supercritical dispersion method according to an embodiment had excellent proton conductivity and hydrogen gas barrier property. Also, even when a membrane electrode assembly was manufactured by applying the ionomer dispersion liquid as an electrode binder, the performance of a unit cell was very excellent. In addition, it was confirmed that the unit cell performance of the ion exchange membrane-based membrane electrode assembly manufactured using the recovered ionomer was excellent, and even when the membrane electrode assembly was manufactured by applying the ion exchange membrane as an electrode binder, the unit cell performance was also very good.

Therefore, it can be confirmed that according to the present invention, the ionomer can be extracted from a used or defective ion exchange membrane without performance loss.

The present invention will be described in more detail through the following Examples. However, the following Examples are presented by way of example to aid understanding of the present invention and should not be construed as limiting the scope of the present invention thereto.

### Example 1: Recovery of ionomer and catalyst from long-term used membrane electrode assembly

### [Example 1-1]

The ionomer and catalyst were recovered from the membrane electrode assembly through the supercritical dispersion method. The membrane electrode assembly was the membrane electrode assembly composed of a Nafion separator, which was a perfluorine-based ionomer, and a carbon-supported catalyst (Pt/C), which was used for more than 24 months.

Prior to supercritical dispersion for the recovery of the perfluorine-based ionomer, the following acid treatment process was performed in order to remove impurities from the membrane electrode assembly that would have been contaminated during long-term operation. The membrane electrode assembly was prepared by treating it in a boiling 0.5 M H₂SO₄ aqueous solution for 2 hours, and removing excessive H₂SO₄ from the surface of the membrane electrode assembly by boiling in ultrapure water for 2 hours.

As described above, 1-propanol was selected as an alcohol solvent for supercritical dispersion of the membrane electrode assembly from which impurities were removed. The membrane electrode assembly (weight of 20 g) was added to a glass liner containing 111.1 g of 1-propanol and 90.8 g of ultrapure water (weight ratio of 55: 45).

A high-pressure/high-temperature reactor (4560 Mini-Bench Reactor System, PARR, USA) was fitted with the glass liner, and then the reaction mixture in the reactor was heated to 300 °C at a heating rate of 4.25 °C min⁻¹. When the pressure reached 7 MPa, the reaction was maintained for 2 hours. After cooling the reaction slowly under atmospheric pressure (101.3 kPa), a dispersion liquid was obtained. The recovered dispersion liquid was separated from the support fibers and filtered using a paper filter having an average pore size of 5 to 10 µm. The dispersion liquid that has passed through the filter paper is a dispersion liquid in which the ionomer is extracted in a mixed solvent of alcohol and water, and may contain a small amount of water-soluble substances such as an oxidation stabilizer. On the other hand, the carbon-supported catalyst (Pt/C), which can be used as an electrode material, is separated from the residue containing the undispersed support fibers and the carbon-supported catalyst with a 6 to 10 µm filter paper (No.100, HYUNDAI MICRO, KOREA), and then, the catalytic component is separated using a 2.5 to 5 µm filter paper (No.51, HYUNDAI MICRO, KOREA) at 300 Kpa pressure, or by operating a centrifugal separator (T04B, Hanil, KOREA) at 4000 RPM for 5 minutes in the same separation method except for this.

In order to evaluate proton conduction and hydrogen permeation behavior prior to introducing PEFC as an ion exchange membrane, an ion exchange membrane was manufactured by a solution coating method using the above recovered ionomer dispersion liquid. To this end, the ionomer dispersion liquid was cast on a glass plate whose surface was hydrophilized, solidified in a vacuum oven set at 50 °C for 3 hours, and heat-treated at 210 °C for 1 hour to manufacture a membrane. Thereafter, the membrane was prepared by treating it in a boiling 0.5 M H₂SO₄ aqueous solution for 2 hours and boiling in ultrapure water for 2 hours to remove excessive H₂SO₄ on the surface of the film sample.

To evaluate PEFC electrochemical performance, an electrode slurry containing a certain amount of a commercially available 40 wt% Pt/C catalyst (Johnson Matthey, England) was transferred to both sides of the ion exchange membrane corresponding to an active area of 25 cm² on the ion exchange membrane manufactured as described above to form a membrane electrode assembly. In this case, the membrane was manufactured so that the amount of the catalyst loaded was 0.4 mg cm⁻².

### [Example 1-2]

In order to evaluate PEFC electrochemical performance, a commercially available 40 wt% Pt/C catalyst (Johnson Matthey, UK) was mixed with ultrapure water and isopropyl alcohol (IPA, Sigma-Aldrich, USA) by using a homogenizer (VCX130, Sonics & Materials Inc., USA). Then, 5 wt% of the ionomer dispersion liquid manufactured in Example 1-1 was added to the ink slurry as an electrode binder and further mixed for 30 minutes. A 7 cm × 7 cm Nafion membrane (NR211, Chemours, USA) was prepared, and the manufactured ink slurry was sprayed onto the cathode-side layer corresponding to the active area of 25 cm² at an amount of 0.4 mg cm⁻².

### [Example 1-3]

In order to evaluate PEFC electrochemical performance, the electrode catalyst recovered in Example 1-1 above was mixed with ultrapure water and isopropyl alcohol (IPA, Sigma-Aldrich, USA) by using a homogenizer (VCX130, Sonics & Materials Inc., USA). Then, the mixture was added to the ink slurry using a commercially available Nafion electrode binder (D521, Chemours, USA) and mixed for another 30 minutes. A 7 cm × 7 cm Nafion membrane (NR211, Chemours, USA) was prepared, and the manufactured ink slurry was transferred to the cathode-side layer corresponding to the active area of 25 cm² at an amount of 0.4 mg cm⁻², so that the membrane electrode assembly was manufactured.

### [Example 1-4]

In this Example, for the membrane electrode assembly that includes a separator made of polyarylene ether sulfone BPS-40 (poly(arylene ether sulfone) random copolymers; BPS, degree of sulfonation: 40 mol%) hydrocarbon-based ionomer, instead of perfluorine-based ionomer, and the carbon-supported catalyst (Pt/C) and has been used for more than 24 months, the supercritical dispersion method under the same conditions as in Example 1-1 was applied to recover the ionomer and catalyst from the membrane electrode assembly.

### [Comparative Example 1-1]

To compare the performance of the ion exchange membrane, a commercially available Nafion membrane (NR211, Chemours, USA), which is a commercially available cation conductive ionomer membrane, was prepared, and a membrane electrode assembly was manufactured in the same manner as in Example 1-1.

### [Comparative Example 1-2]

To compare the performance of the electrode binder, a commercially available Nafion binder (D521, Chemours, USA) was prepared, and a membrane electrode assembly was manufactured in the same manner as in Example 1-2.

### [Comparative Example 1-3]

A commercially available 40 wt% Pt/C catalyst (Johnson Matthey, England) was prepared for performance comparison of the carbon-supported catalyst, and a membrane electrode assembly was manufactured in the same manner as in Example 1-3.

### [Comparative Example 1-4]

To compare the performance of ion exchange membranes, a solution was prepared by stirring polyarylene ether sulfone BPS-40 (poly(arylene ether sulfone) random copolymers; BPS, sulfonation degree: 40 mol%), instead of perfluorine-based ionomer, in dimethylacetamide (DMAc, Sigma-Aldrich, USA) at room temperature for one day, and an ion exchange membrane was manufactured by a solution coating method. To this end, the membrane was cast on a glass plate whose surface was treated to be hydrophilic, solidified in a vacuum oven set at 50 °C for 3 hours, and heat-treated at 210 °C for 1 hour to manufacture the membrane. Thereafter, the membrane was treated in a boiling 0.5 M H₂SO₄ aqueous solution for 2 hours, and the membrane was prepared by boiling in ultrapure water for 2 hours to remove excessive H₂SO₄ on the surface of the film sample, and the membrane electrode assembly was manufactured in the same manner as in Example 1-1.

### [Comparative Example 1-5]

The ionomer and catalyst were dispersed in the same manner as in Example 1-1, except that the reaction was carried out in the reactor (4560 Mini-Bench Reactor System, PARR, USA) at the temperature of 80 °C and atmospheric pressure. As such, when the ion exchange membrane was dispersed under temperature and pressure conditions outside the supercritical range, the ionomer was hardly extracted from the membrane. Even if a small amount was extracted, such a low-concentration ionomer was not evenly dispersed in the solvent, resulting in poor dispersion characteristics. Therefore, it was confirmed that the ionomer dispersion liquid obtained in this experiment had a too low concentration and poor dispersion characteristics, so that it was not suitable for manufacturing an ion exchange membrane or an electrode binder.

### [Evaluation Example 1-1] Proton conduction behavior (ion exchange membrane)

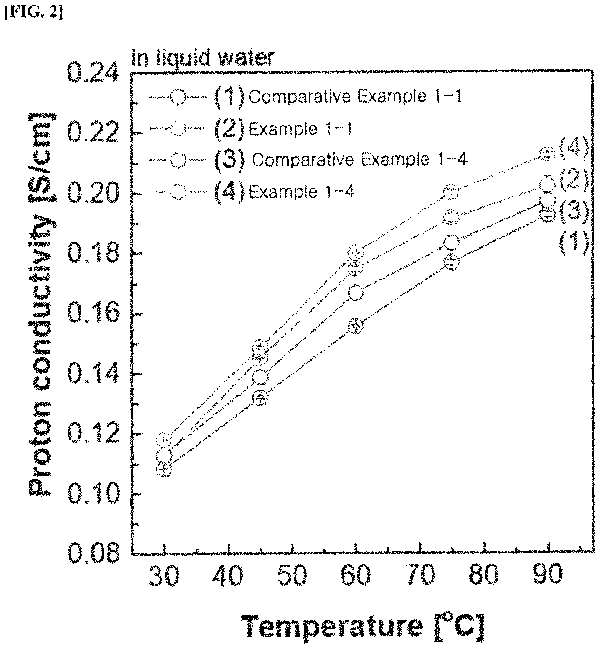

For the ion exchange membrane manufactured using the ionomer recovered from the MEA according to Example 1-1 and the commercially available ion exchange membrane of Comparative Example 1-1, the proton conduction behavior, which is one of the important performance factors in PEFC, was evaluated according to temperature. As can be seen from the measurement results in FIG. 2, it was confirmed that the ion exchange membrane manufactured in Example 1-1 exhibited better proton conduction behavior than Comparative Example 1-1. This characteristic can help improve the performance of PEFC due to excellent proton conductivity when introduced as an ion exchange membrane.

In addition, when compared to the commercially available ion exchange membrane of Comparative Example 1-1, in view of the result that the loss of proton conductivity associated with the terminal hydrophilic functional group did not occur, it can be considered that the perfluorine-based ionomer was extracted/recovered without chemical damage during the supercritical dispersion.

### [Evaluation Example 1-2] Hydrogen gas permeation behavior (ion exchange membrane)

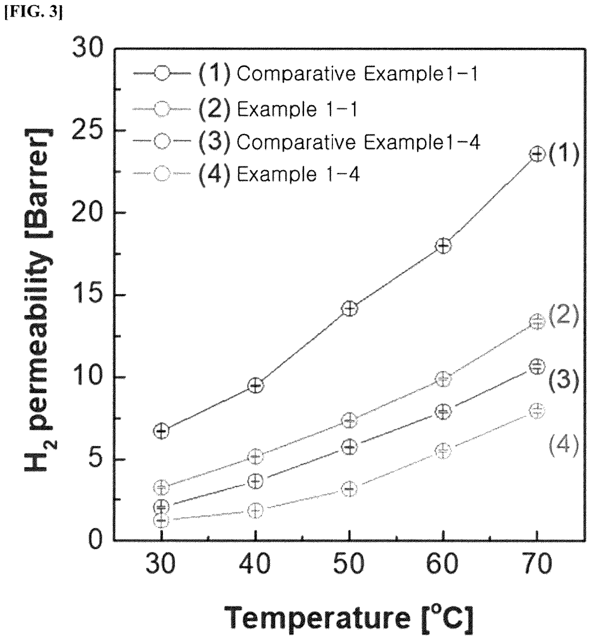

For the ion exchange membrane manufactured using the ionomer recovered from the MEA according to Example 1-1 and the commercially available ion exchange membrane of Comparative Example 1-1, hydrogen gas permeation behavior, which is one of the important performance factors in PEFC, was evaluated according to temperature. As can be seen from the measurement results in FIG. 3, the ion exchange membrane manufactured in Example 1-1 exhibited significantly improved hydrogen permeation behavior while having a chemical structure similar to that of Comparative Example 1-1. This characteristic is considered as the effect of forming a membrane more densely due to the unique dispersion characteristic obtained through the supercritical dispersion process for recovery. Therefore, when the ion exchange membrane manufactured using the ionomer recovered from the MEA is introduced, it can help improve the performance of the PEFC due to its excellent hydrogen gas barrier properties.

### [Evaluation Example 1-3] Unit cell performance (ion exchange membrane)

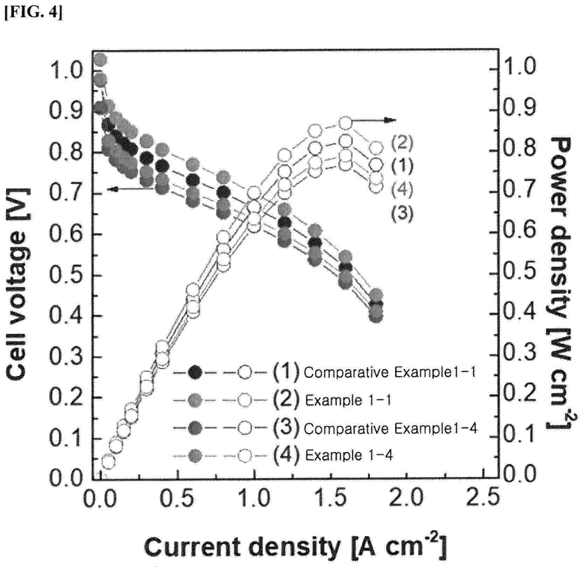

FIG. 4 is a graph showing current-voltage curves of Example 1-1 and Comparative Example 1-1 at the condition of 65 °C. It can be confirmed from the results that Example 1-1 manufactured using the ionomer dispersion liquid recovered from the membrane electrode assembly exhibited better unit cell performance than Comparative Example 1-1, which was a commercially available ion exchange membrane. As described above, it is considered that this is because excellent properties such as proton conductivity and hydrogen gas barrier, which are important performance factors of PEFC, are expressed, resulting in the improved PEFC performance.

### [Evaluation Example 1-4] Unit cell performance (electrode binder)

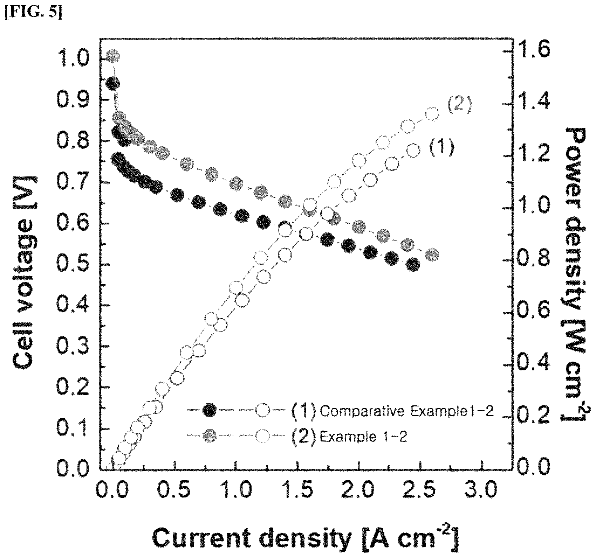

FIG. 5 is a graph showing current-voltage curves of membrane electrode assemblies manufactured by introducing Example 1-2 and Comparative Example 1-2 as an electrode binder into a cathode under an oxygen condition at 65 °C. It can be seen from the results that Example 1-2 (1.52 A/cm²@0.6 V) exhibited better unit cell performance than commercial Comparative Example 1-2 (1.28 A/cm²@0.6 V). It is considered that this is due to the expression of unique dispersion characteristics obtained through the supercritical dispersion process for recovery, which leads to effective proton conduction and gas permeation characteristics in the electrode layer, which is attributed to the improvement of PEFC performance.

### [Evaluation Example 1-5] Unit cell performance (carbon-supported catalyst)

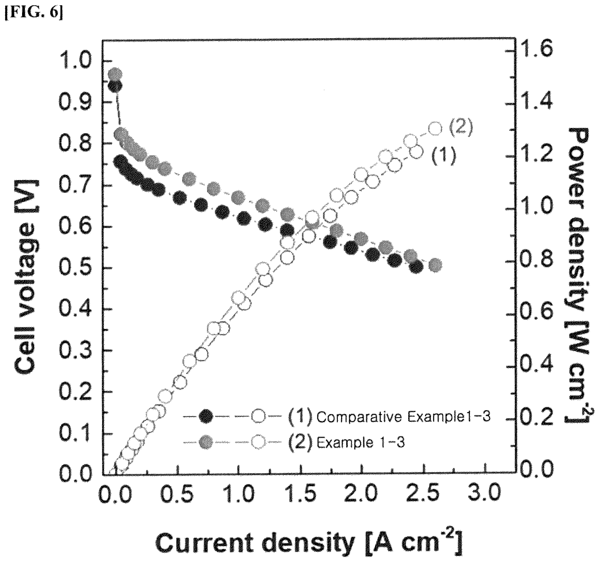

FIG. 6 is a graph showing current-voltage curves of membrane electrode assemblies manufactured by introducing the catalyst obtained in Example 1-3 and the catalyst of Comparative Example 1-3 into a cathode under an oxygen condition of 65 °C. It can be confirmed from the results that Example 2 (1.52 A/cm²@0.6 V) exhibited better unit cell performance than commercial Comparative Example 2 (1.28 A/cm²@0.6 V). It is considered that this is due to the expression of unique dispersion characteristics obtained through the supercritical dispersion process for recovery, which leads to effective proton conduction and gas permeation characteristics in the electrode layer, which is attributed to the improvement of PEFC performance.

### Example 2: Recovery of ionomer and catalyst from defective membrane electrode assembly

### [Example 2-1]

The membrane electrode assembly, which was determined to be defective due to a defect during the manufacturing process, was put into a solvent and dispersed under specific temperature and pressure conditions to recover the ionomer and catalyst. The membrane electrode assembly was the membrane electrode assembly composed of a Nafion separator, which was a perfluorine-based ionomer, and a carbon-supported catalyst (Pt/C), which was a defective product generated by incomplete application of the electrode during the process.

Prior to supercritical dispersion for the recovery of the perfluorine-based ionomer, the following acid treatment process was performed in order to remove impurities from the membrane electrode assembly that would have been contaminated while being left as a defective product in advance. The membrane electrode assembly was prepared by treating it in a boiling 0.5 M H₂SO₄ aqueous solution for 2 hours, and removing excessive H₂SO₄ from the surface of the membrane electrode assembly by boiling in ultrapure water for 2 hours.

As described above, 1-propanol was selected as an alcohol solvent for supercritical dispersion of the membrane electrode assembly from which impurities were removed. The membrane electrode assembly (weight of 25 g) was added to a glass liner containing 111 g of 1-propanol and 90 g of ultrapure water (weight ratio of 55: 45). A high-pressure/high-temperature reactor (4560 Mini-Bench Reactor System, PARR, USA) was fitted with the glass liner, and then the reaction mixture in the reactor was heated to 260 °C at a heating rate of 4.25 °C min⁻¹. When the pressure reached 13 MPa, the reaction was maintained for 2 hours. After cooling the reaction slowly under atmospheric pressure (101.3 kPa), a dispersion liquid was obtained.

The recovered dispersion liquid was separated from the support fibers and filtered using a paper filter having an average pore size of 5 to 10 µm. The dispersion liquid that has passed through the filter paper is a dispersion liquid in which the ionomer is extracted in a mixed solvent of alcohol and water, and may contain a small amount of water-soluble substances such as an oxidation stabilizer. On the other hand, the carbon-supported catalyst (Pt/C), which can be used as an electrode material, is separated from the residue containing the undispersed support fibers and the carbon-supported catalyst with a 6 to 10 µm filter paper (No.100, HYUNDAI MICRO, KOREA), and then, the catalytic component is separated using a 2.5 to 5 µm filter paper (No.51, HYUNDAI MICRO, KOREA) at 300 Kpa pressure, or by operating a centrifugal separator (T04B, Hanil, KOREA) at 4000 RPM for 5 minutes in the same separation method except for this.

An ion exchange membrane was manufactured by a solution coating method using the above ionomer dispersion liquid recovered from the membrane electrode assembly defected during a process. To this end, the ionomer dispersion liquid was cast on a glass plate whose surface was hydrophilized, solidified in a vacuum oven set at 45 °C for 3 hours, and heat-treated at 220 °C for 2 hours to manufacture a membrane. Thereafter, the membrane was prepared by treating it in a boiling 0.5 M H₂SO₄ aqueous solution for 2 hours and boiling in ultrapure water for 2 hours to remove excessive H₂SO₄ on the surface of the film sample.

To evaluate PEFC electrochemical performance, an electrode slurry containing a certain amount of a commercially available 40 wt% Pt/C catalyst (Johnson Matthey, England) was transferred to both sides of the membrane corresponding to an active area of 25 cm² on the ion exchange membrane manufactured as described above to manufacture a membrane electrode assembly. In this case, the membrane was manufactured so that the amount of the catalyst loaded was 0.4 mg cm⁻².

### [Example 2-2]

The process of recovering the ionomer dispersion liquid from the membrane electrode assembly defected during a process was performed in the same manner as in Example 2-1.

In order to evaluate PEFC electrochemical performance, a commercially available 40 wt% Pt/C catalyst (Johnson Matthey, UK) was mixed with ultrapure water and isopropyl alcohol (IPA, Sigma-Aldrich, USA) by using a homogenizer (VCX130, Sonics & Materials Inc., USA). Then, 5 wt% of the ionomer dispersion liquid recovered from the membrane electrode assembly defected during a process was added to the ink slurry as an electrode binder and further mixed for 30 minutes. A 7 cm × 7 cm Nafion membrane (NR211, Chemours, USA) was prepared, and the ink slurry manufactured as above was transferred onto the cathode-side layer corresponding to the active area of 25 cm² at an amount of 0.4 mg cm⁻², so that the membrane electrode assembly was manufactured.

### [Example 2-3]

In order to evaluate PEFC electrochemical performance, the electrode catalyst recovered in Example 2-1 above was mixed with ultrapure water and isopropyl alcohol (IPA, Sigma-Aldrich, USA) by using a homogenizer (VCX130, Sonics & Materials Inc., USA). Then, the mixture was added to the ink slurry using a commercially available Nafion electrode binder (D521, Chemours, USA) and mixed for another 30 minutes. A 7 cm × 7 cm Nafion membrane (NR211, Chemours, USA) was prepared, and the manufactured ink slurry was transferred to the cathode side corresponding to the active area of 25 cm² at an amount of 0.4 mg cm⁻², so that the membrane electrode assembly was manufactured.

### [Comparative Example 2-1]

For performance comparison, membrane electrode assemblies were manufactured using commercially available ion exchange membranes, electrode binders, and catalysts, which were all in normal conditions. A commercially available Nafion membrane (NR211, Chemours, USA), which was cation conductive ionomer membrane, a Nafion electrode binder (D521, Chemours, USA), and a 40 wt% Pt/C catalyst (Johnson Matthey, UK) as a carbon supported catalyst, were prepared. In order to evaluate PEFC electrochemical performance, the carbon-supported catalyst was mixed with ultrapure water and isopropyl alcohol (IPA, Sigma-Aldrich, USA) using a homogenizer (VCX130, Sonics & Materials Inc., USA), and a Nafion electrode binder was added to the ink slurry and further mixed for 30 minutes. A 7 cm × 7 cm Nafion membrane was prepared, and the ink slurry manufactured as described above was transferred to both sides of the membrane corresponding to an active area of 25 cm² in an amount of 0.4 mg cm⁻², respectively, to manufacture a membrane electrode assembly.

### [Comparative Example 2-2]

A membrane electrode assembly, which was determined to be defective due to uneven surface formation in the active area due to incomplete electrode application during the manufacturing process of the membrane electrode assembly, was prepared.

### [Comparative Example 2-3]

The ionomer and catalyst were dispersed in the same manner as in Example 1, except that the reaction was carried out in the reactor (4560 Mini-Bench Reactor System, PARR, USA) at the temperature of 80 °C and atmospheric pressure. As such, when the ion exchange membrane was dispersed under conditions of temperature and pressure outside the supercritical range, almost no extraction of ionomer from the membrane occurred. Even with a small amount of extraction, a low concentration of ionomer was not evenly dispersed in the solvent, resulting in poor dispersion characteristics. Therefore, it was confirmed that the ionomer dispersion liquid obtained in this experiment had too low a concentration and poor dispersion characteristics, and thus was not suitable for manufacturing an ion exchange membrane or an electrode binder.

### [Evaluation Example 2-1] Unit cell performance (ion exchange membrane)

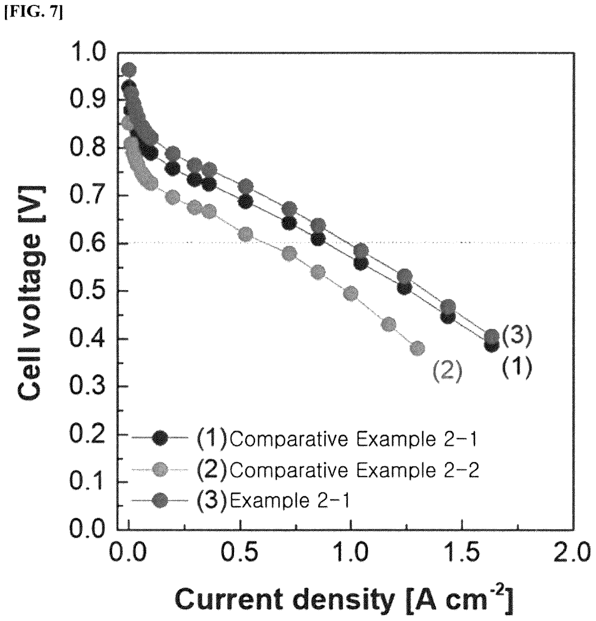

FIG. 7 is a graph showing current-voltage curves of Example 2-1 and Comparative Examples 2-1 and 2-2 at the condition of 65 °C. It can be confirmed from the results that Example 2-1 including the ion exchange membrane manufactured using the ionomer dispersion liquid recovered from the membrane electrode assembly exhibited better unit cell performance than Comparative Examples 2-1 and 2-2. Considering the result that the performance degradation due to the loss of proton conductivity associated with the terminal hydrophilic functional group did not occur, it can be considered that the perfluorine-based ionomer was extracted/recovered without chemical damage during supercritical dispersion, and improved performance beyond performance recovery was confirmed. In addition, in the case of the open circuit voltage (OCV) associated with hydrogen gas permeation behavior, Example 2-1 (0.97 V@0 A/cm²) is higher than Comparative Example 2-1 (0.93 V@0 A/cm²). From the results, it can be seen that the hydrogen gas barrier property was also improved. Also, as described above, it is considered that this is because excellent properties such as proton conductivity and hydrogen gas barrier, which are important performance factors of PEFC, are expressed, resulting in the improved PEFC performance.

### [Evaluation Example 2-2] Unit cell performance (electrode binder)

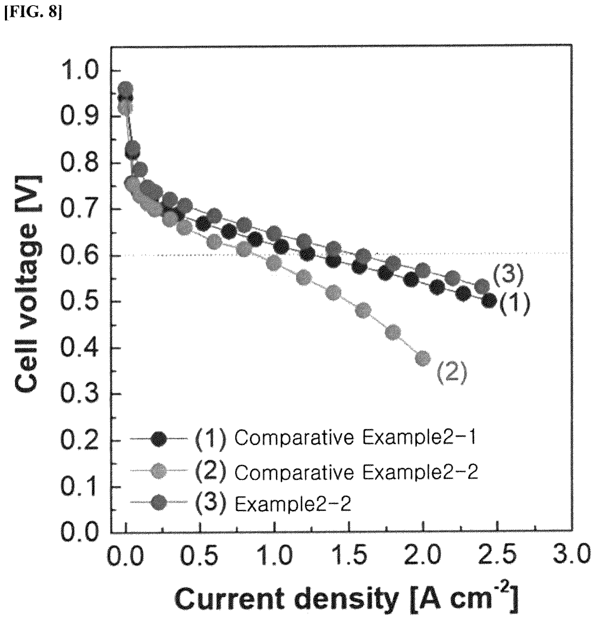

FIG. 8 is a graph showing current-voltage curves of Example 2-2 and Comparative Examples 2-1 and 2-2 under an oxygen condition at 65 °C. It can be seen from the results that Example 2-2 (1.57 A/cm²@0.6 V) exhibited better unit cell performance than Comparative Example 2-1 (1.24 A/cm²@0.6 V) and Comparative Example 2-2 (0.82 A/cm²@0.6 V). It is considered that this is due to the expression of unique dispersion characteristics obtained through the supercritical dispersion process for recovery, which leads to effective proton conduction and gas permeation characteristics in the electrode layer, which is attributed to the improvement of PEFC performance. Also, in view of no performance degradation, it can be considered that the perfluorine-based ionomer was extracted/recovered without chemical damage during supercritical dispersion, and improved performance beyond performance recovery was confirmed.

### [Evaluation Example 2-3] Unit cell performance comparison test (carbon-supported catalyst)

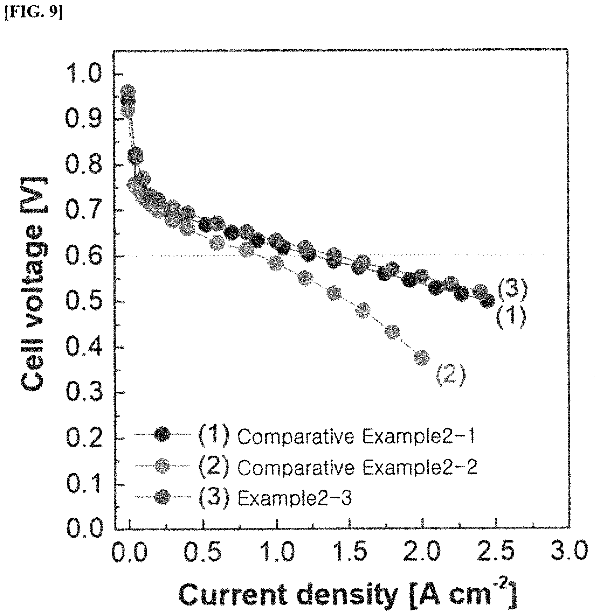

FIG. 9 is a graph showing current-voltage curves of Example 2-3 and Comparative Examples 2-1 and 2-2 under an oxygen condition of 65 °C. It can be confirmed from the results that Example 2-3 (1.35 A/cm²@0.6 V) exhibited better unit cell performance than commercial Comparative Example 2-1 (1.23 A/cm²@0.6 V) and commercial Comparative Example 2-2 (0.81 A/cm²@0.6 V). In view of no performance degradation compared to Comparative Example 2-1, it is considered that during supercritical dispersion, the catalyst is extracted/recovered without deformation or chemical damage of the carbon-supported catalyst structure. Also, In view of the recovered performance compared to Comparative Example 2-2, it was also confirmed that there is no problem in recovering the catalyst without damage and applying it as an electrode catalyst again.

### Example 3: Ionomer recovery from long-term used ion exchange membrane

### [Example 3-1]

The perfluorine-based ionomer was selectively extracted from the perfluorine-based double-layer separator through a supercritical dispersion method and recovered as a dispersion liquid containing an alcohol-water mixed solvent. Asahi Kasei's Asiplex membrane, which has been used for more than 24 months, was selected as a perfluorine-based double-layer separator for recovery, and H₂SO₄ (purity of 95.0 to 98.0%) was purchased from Aldrich Chemical Co., USA and prepared without further purification to remove impurities.

Prior to supercritical dispersion for the recovery of the perfluorine-based ionomer, the following acid treatment process was performed in order to remove impurities from the separator that would have been contaminated during long-term operation in advance. The ion exchange membrane was prepared by treating it in a boiling 0.5 M H₂SO₄ aqueous solution for 2 hours, and removing excessive H₂SO₄ from the surface of the ion exchange membrane by boiling in ultrapure water for 2 hours.

As described above, 1-propanol was selected as an alcohol solvent for supercritical dispersion of Asehi Kasei's Asiplex membrane, which was a perfluorine-based double-layer separator from which impurities were removed, and was purchased from Aldrich Chemical Co., USA, and prepared without further purification.

Aciplex membrane (weight of 22.3 g) was added to a glass liner containing 123.8 g of 1-propanol and 101.2 g of ultrapure water (weight ratio of 55: 45). A high-pressure/high-temperature reactor (4560 Mini-Bench Reactor System, PARR, USA) was fitted with the glass liner, and then the reaction mixture in the reactor was heated to 300 °C at a heating rate of 4.25 °C min⁻¹. When the pressure reached 7 MPa, the reaction was maintained for 2 hours. After cooling the reaction slowly under atmospheric pressure (101.3 kPa), a dispersion liquid was obtained. Lastly, the recovered ionomer dispersion liquid was separated from the support fibers and filtered using a paper filter having an average pore size of 5 to 10 µm.

In order to evaluate proton conduction and hydrogen permeation behavior prior to introducing PEFC as an ion exchange membrane, an ion exchange membrane was manufactured by a solution coating method using the above recovered ionomer dispersion liquid. To this end, the ionomer dispersion liquid was cast on a glass plate whose surface was hydrophilized, solidified in a vacuum oven set at 50 °C for 3 hours, and heat-treated at 210 °C for 1 hour to manufacture a membrane. Thereafter, the membrane was prepared by treating it in a boiling 0.5 M H₂SO₄ aqueous solution for 2 hours and boiling in ultrapure water for 2 hours to remove excessive H₂SO₄ on the surface of the film sample.

To evaluate the electrochemical performance of a polymer electrolyte fuel cell, an electrode slurry containing a certain amount of a commercially available 40 wt% Pt/C catalyst (Johnson Matthey, England) was transferred to both sides of the ion exchange membrane corresponding to an active area of 25 cm² on the ion exchange membrane manufactured as described above to form a membrane electrode assembly. In this case, the membrane was manufactured so that the amount of the catalyst loaded was 0.4 mg cm⁻².

### [Example 3-2]

The process of removing impurities from the perfluorine-based double-layer separator was performed in the same manner as in Example 3-1. Accordingly, 1-propanol was selected as an alcohol solvent for supercritical dispersion of Asahi Kasei's Asiplex membrane, which was a perfluorine-based double-layer separator from which impurities were removed, and was purchased from Aldrich Chemical Co., USA, and prepared without further purification.

Aciplex membrane (weight of 11.8 g) was added to a glass liner containing 123.2 g of 1-propanol and 101.8 g of ultrapure water (weight ratio of 55: 45). A high-pressure/high-temperature reactor (4560 Mini-Bench Reactor System, PARR, USA) was fitted with the glass liner, and then the reaction mixture in the reactor was heated to 290 °C at a heating rate of 4.25 °C min⁻¹. When the pressure reached 6.5 MPa, the reaction was maintained for 2 hours. After cooling the reaction slowly under atmospheric pressure (101.3 kPa), a dispersion liquid was obtained. Lastly, the recovered ionomer dispersion liquid was separated from the support fibers using a paper filter having an average pore size of 5 to 10 µm to obtain an ionomer dispersion liquid to be used as an electrode binder.

In order to evaluate the electrochemical performance of a polymer electrolyte fuel cell, a commercially available 40 wt% Pt/C catalyst (Johnson Matthey, UK) was mixed with ultrapure water and isopropyl alcohol (IPA, Sigma-Aldrich, USA) by using a homogenizer (VCX130, Sonics & Materials Inc., USA). Then, 5 wt% of the ionomer electrode binder manufactured as above was added to the ink slurry and further mixed for 30 minutes. A 7 cm × 7 cm Nafion membrane (NR211, Chemours, USA) was prepared, and the ink slurry manufactured above was sprayed onto the cathode-side layer corresponding to the active area of 25 cm² at an amount of 0.4 mg cm⁻².

### [Comparative Example 3-1]

To compare the performance of the ion exchange membrane, a commercially available Nafion membrane (NR211, Chemours, USA), which is a commercially available cation conductive ionomer membrane, was prepared, and an MEA was manufactured in the same manner as in Example 3-1.

### [Comparative Example 3-2]

To compare the performance of the electrode binder, a commercially available Nafion binder (D521, Chemours, USA) was prepared, and an MEA was manufactured in the same manner as in Example 3-2.

### [Comparative Example 3-3]

Aciplex membrane (weight of 22.3 g) was added to a glass liner containing 123.8 g of 1-propanol and 101.2 g of ultrapure water (weight ratio of 55: 45). The ionomer was dispersed in the same manner as in Example 3-1, except that the reaction was carried out in the reactor (4560 Mini-Bench Reactor System, PARR, USA) at the temperature of 80 °C and atmospheric pressure. As such, when the ion exchange membrane was dispersed under temperature and pressure conditions outside the supercritical range, the ionomer was hardly extracted from the membrane. Even if a small amount was extracted, such a low-concentration ionomer was not evenly dispersed in the solvent, resulting in poor dispersion characteristics. Therefore, it was confirmed that the ionomer dispersion liquid obtained in this experiment had a too low concentration and poor dispersion characteristics, so that it was not suitable for manufacturing an ion exchange membrane or an electrode binder.

### [Evaluation Example 3-1] Proton conduction behavior (ion exchange membrane)

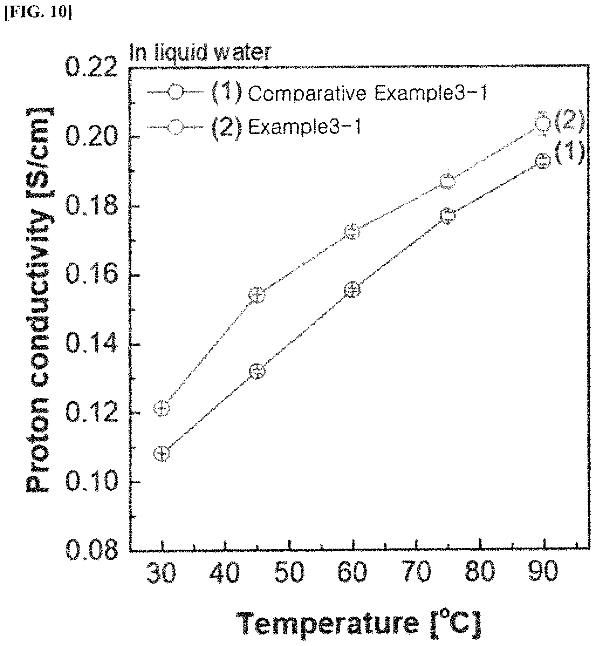

For the ion exchange membranes prepared in Example 3-1 and Comparative Example 3-1, the proton conduction behavior, which is one of the important performance factors in PEFC, was evaluated according to temperature. As can be seen from the measurement results in FIG. 10, it was confirmed that the ion exchange membrane of Example 3-1 exhibited better proton conduction behavior than the commercially available ion exchange membrane of Comparative Example 3-1. This characteristic can help improve the performance of PEFC due to excellent proton conductivity when introduced as an ion exchange membrane.

In addition, when comparing the ion exchange membrane of Example 3-1 with the commercially available ion exchange membrane of Comparative Example 3-1, considering the result that the loss of proton conductivity associated with the terminal hydrophilic functional group did not occur, it can be considered that the perfluorine-based ionomer was extracted/recovered without chemical damage during the supercritical dispersion.

### [Evaluation Example 3-2] Hydrogen gas permeation behavior (ion exchange membrane)

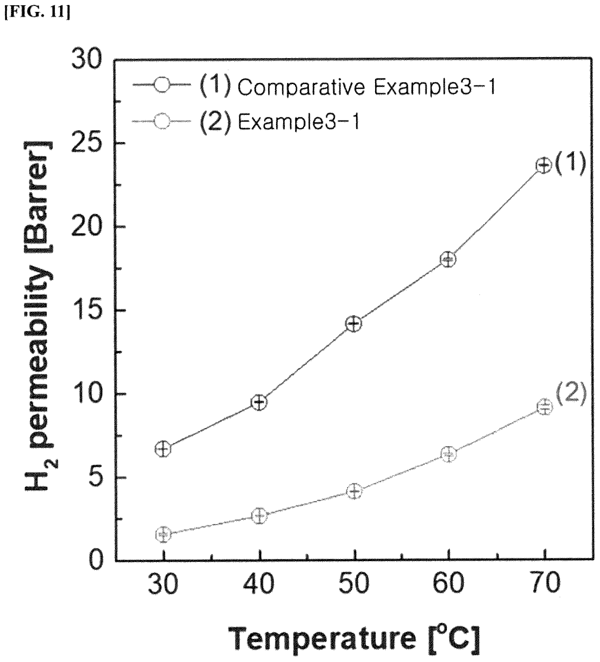

For the ion exchange membranes prepared in Example 3-1 and Comparative Example 3-1, hydrogen gas permeation behavior, which is one of the important performance factors in PEFC, was evaluated according to temperature. As can be seen from the measurement results in FIG. 11, Example 3-1 exhibited significantly improved hydrogen permeation behavior while having a chemical structure similar to that of Comparative Example 1-1. This characteristic is considered as the effect of forming a membrane more densely due to the unique dispersion characteristic obtained through the supercritical dispersion process for recovery. Therefore, when this is introduced as an ion exchange membrane, it can help improve the performance of the PEFC due to its excellent hydrogen gas barrier properties.

### [Evaluation Example 3-3] Unit cell performance (ion exchange membrane)

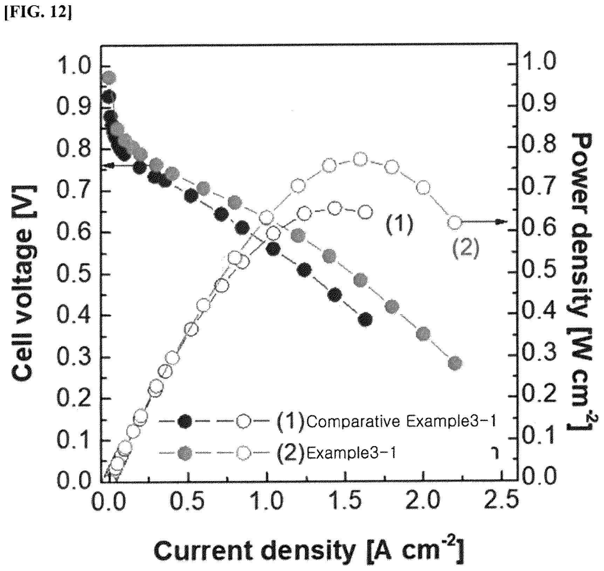

FIG. 12 is a graph showing current-voltage curves of Example 3-1 and Comparative Example 3-1 at the condition of 65 °C. It can be confirmed from the results that the membrane electrode assembly of Example 3-1, which was manufactured using the ionomer dispersion liquid recovered from the long-term used separator exhibited better unit cell performance than the commercially available Comparative Example 3-1. As described above, it is considered that this is because excellent properties such as proton conductivity and hydrogen gas barrier, which are important performance factors of PEFC, are expressed, resulting in the improved PEFC performance.

### [Evaluation Example 3-4] Unit cell performance (electrode binder)

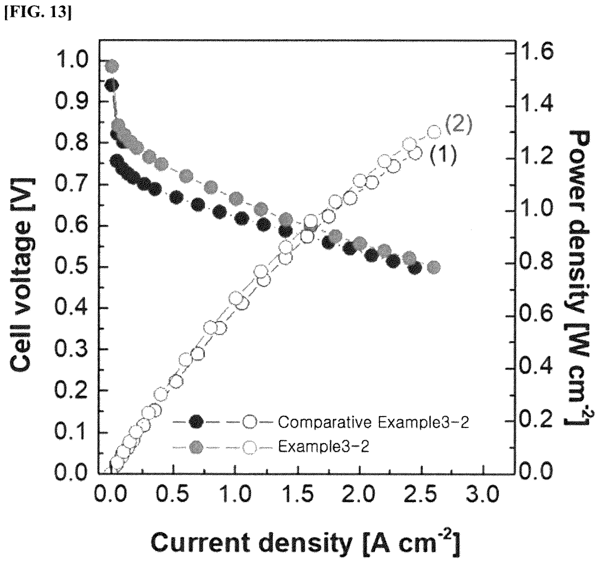

FIG. 13 is a graph showing current-voltage curves of the MEAs manufactured by introducing the electrode binders of Example 3-2 and Comparative Example 3-2 into a cathode under an oxygen condition at 65 °C. It can be seen from the results that Example 2 (1.52 A/cm²@0.6 V) exhibited better unit cell performance than commercial Comparative Example 2 (1.28 A/cm²@0.6 V). It is considered that this is due to the expression of unique dispersion characteristics obtained through the supercritical dispersion process for recovery, which leads to effective proton conduction and gas permeation characteristics in the electrode layer, which is attributed to the improvement of PEFC performance.

### Example 4: Ionomer recovery from ion exchange membrane defected during a process

### [Example 4-1]

The perfluorine-based ionomer was extracted from the perfluorine-based separator, which was determined to be defective during the manufacturing process, and recovered as a dispersion liquid containing an alcohol-water mixed solvent. An ion exchange membrane was manufactured again using the recovered ionomer dispersion liquid.

For this experiment, an ion exchange membrane was manufactured in the form of a reinforced composite membrane in which Nafion ionomer (Chemours, USA) was filled in the pores of a porous PTFE support, and a poor separator generated by partial impregnation of the ionomer during the manufacturing process was used. 1-propanol was selected as an alcohol solvent for supercritical dispersion for recovering the perfluorine-based ionomer in the ion exchange membrane, and was purchased from Aldrich Chemical Co., USA, and prepared without further purification.

The perfluorine-based ion exchange membrane (weight of 25 g) defected during a process was added to a glass liner containing 124 g of 1-propanol and 101 g of ultrapure water (weight ratio of 55: 45). A high-pressure/high-temperature reactor (4560 Mini-Bench Reactor System, PARR, USA) was fitted with the glass liner, and then the reaction mixture in the reactor was heated to 270 °C at a heating rate of 4.25 °C min⁻¹. When the pressure reached 7 MPa, the reaction was maintained for 2 hours. After cooling the reaction slowly under atmospheric pressure (101.3 kPa), a dispersion liquid was obtained. Lastly, the recovered ionomer dispersion liquid was separated and filtered from the support fibers using a paper filter having an average pore size of 5 to 10 µm.

The ionomer dispersion liquid recovered as described above was immersed in a porous PTFE support to manufacture an ion exchange membrane in the form of a reinforced composite membrane through a dip-coating method. The ionomer dispersion liquid was solidified in a vacuum oven set at 50 °C for 1 hour, and heat-treated at 210 °C for 2 hours to manufacture a membrane. Thereafter, the membrane was prepared by treating it in a boiling 0.5 M H₂SO₄ aqueous solution for 2 hours and boiling in ultrapure water for 2 hours to remove excessive H₂SO₄ on the surface of the film sample.

To evaluate the electrochemical performance of a polymer electrolyte fuel cell, an electrode slurry containing a certain amount of a commercially available 40 wt% Pt/C catalyst (Johnson Matthey, England) was transferred to both sides of the ion exchange membrane corresponding to an active area of 25 cm² on the ion exchange membrane manufactured as described above to form a membrane electrode assembly. In this case, the membrane was manufactured so that the amount of the catalyst loaded was 0.4 mg cm⁻².

### [Example 4-2]

The perfluorine-based ionomer was extracted from the perfluorine-based separator, which was determined to be defective during the manufacturing process, and recovered as a dispersion liquid containing an alcohol-water mixed solvent. An electrode binder was manufactured using the recovered ionomer dispersion liquid.

In this experiment, a reinforced composite membrane in which Nafion ionomer (Chemours, USA) was filled in the pores of a porous PTFE support was used as a defective separator. 1-propanol was selected as an alcohol solvent for supercritical dispersion, and was purchased from Aldrich Chemical Co., USA, and prepared without further purification.

The perfluorine-based ion exchange membrane (weight of 12 g) defected during a process was added to a glass liner containing 124 g of 1-propanol and 101 g of ultrapure water (weight ratio of 55: 45). A high-pressure/high-temperature reactor (4560 Mini-Bench Reactor System, PARR, USA) was fitted with the glass liner, and then the reaction mixture in the reactor was heated to 290 °C at a heating rate of 4.25 °C min⁻¹. When the pressure reached 5 MPa, the reaction was maintained for 1 hour. After cooling the reaction slowly under atmospheric pressure (101.3 kPa), a dispersion liquid was obtained. Lastly, the recovered ionomer dispersion liquid was separated from the support fibers using a paper filter having an average pore size of 5 to 10 µm to obtain an electrode binder.

In order to evaluate the electrochemical performance of a polymer electrolyte fuel cell, a commercially available 40 wt% Pt/C catalyst (Johnson Matthey, UK) was mixed with ultrapure water and isopropyl alcohol (IPA, Sigma-Aldrich, USA) by using a homogenizer (VCX130, Sonics & Materials Inc., USA). Then, 5 wt% of the ionomer electrode binder manufactured as above was added to the ink slurry and further mixed for 30 minutes. A 7 cm × 7 cm Nafion membrane (NR211, Chemours, USA) was prepared, and the ink slurry manufactured above was sprayed onto the cathode-side layer corresponding to the active area of 25 cm² at an amount of 0.4 mg cm⁻².

### [Comparative Example 4-1]

For comparison, an ion exchange membrane in the form of a reinforced composite membrane in which Nafion ionomer was normally filled in the pores of a porous PTFE support without any defects during the manufacturing process (partial impregnation of ionomer, failure to control thickness, failure to control drying/heat treatment conditions, etc.) was used. In addition, for unit cell performance evaluation, an MEA was manufactured and prepared in the same manner as in Example 4-1.

### [Comparative Example 4-2]

For comparison, an ion exchange membrane in the form of a reinforced composite membrane in which Nafion ionomer was partially impregnated in the pores of a porous PTFE support was used as a separator defected during a process. In addition, for unit cell performance evaluation, an MEA was manufactured and prepared in the same manner as in Example 4-1.

### [Comparative Example 4-3]

For comparison of the performance of the electrode binder, a commercially available Nafion binder (D521, Chemours, USA) was prepared, and an MEA was manufactured in the same manner as in Example 4-2.

### [Comparative Example 4-4]

The perfluorine-based ion exchange membrane (weight of 25 g) defected during a process was added to a glass liner containing 124 g of 1-propanol and 101 g of ultrapure water (weight ratio of 55: 45). The ionomer was dispersed in the same manner as in Example 4-1, except that the reaction was carried out in the reactor (4560 Mini-Bench Reactor System, PARR, USA) at the temperature of 80 °C and atmospheric pressure. As such, when the ion exchange membrane was dispersed under temperature and pressure conditions outside the supercritical range, the ionomer was hardly extracted from the membrane. Even if a small amount was extracted, such a low-concentration ionomer was not evenly dispersed in the solvent, resulting in poor dispersion characteristics. Therefore, it was confirmed that the ionomer dispersion liquid obtained in this experiment had a too low concentration and poor dispersion characteristics, so that it was not suitable for manufacturing an ion exchange membrane or an electrode binder.

### [Evaluation Example 4-1] Unit cell performance (ion exchange membrane)

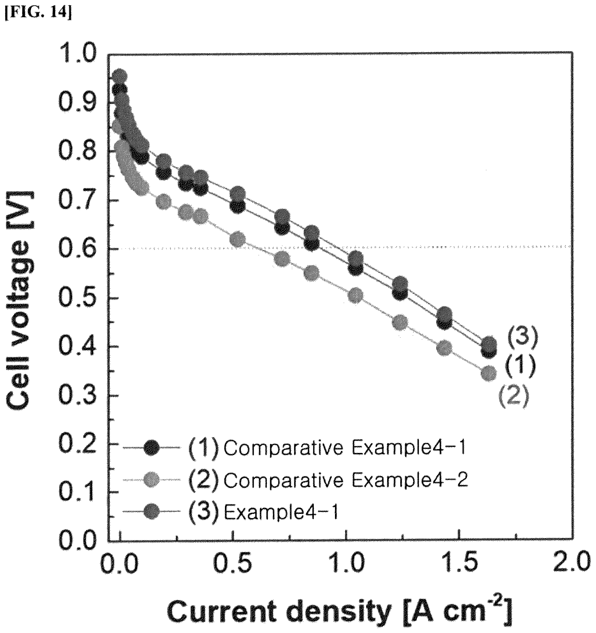

FIG. 14 is a graph showing current-voltage curves of Example 4-1 and Comparative Example 4-1 at the condition of 65 °C. It can be confirmed from the results that Example 4-1 exhibited better unit cell performance than Comparative Examples 4-1 and 4-2 at the same current density. The membrane properties, which have been degraded due to the partial impregnation of the ionomer generated during the manufacturing process, are remanufactured and restored through recovery technology. This is considered to be an effect attributable to the improvement in PEFC performance as the change in the dispersion characteristics of the ionomer during the supercritical dispersion eventually leads to effective proton conduction and gas barrier properties on the ion exchange membrane.

### [Evaluation Example 4-2] Unit cell performance (electrode binder)

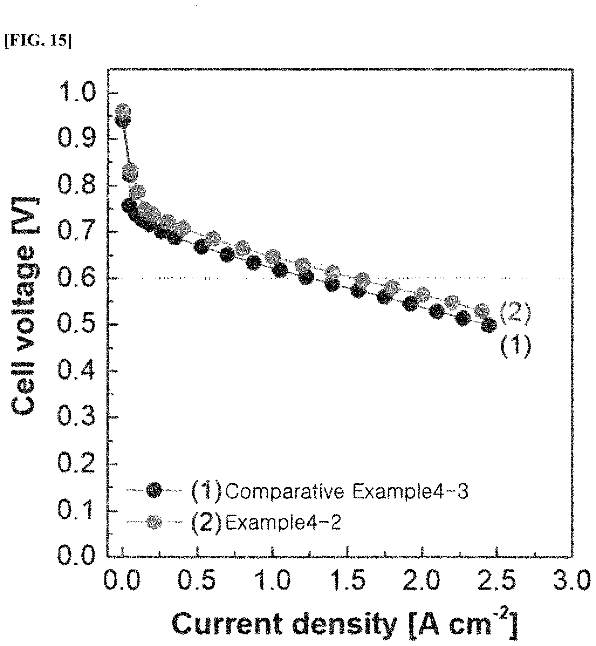

FIG. 15 is a graph showing current-voltage curves of the MEAs manufactured by introducing the electrode binders of Example 4-2 and Comparative Example 4-3 into a cathode under an oxygen condition at 65 °C. It can be seen from the results that Example 4-2 (1.57 A/cm²@0.6 V) exhibited better unit cell performance than commercial Comparative Example 4-3 (1.28 A/cm²@0.6 V). It is considered that this is due to the expression of unique dispersion characteristics obtained through the supercritical dispersion process for recovery, which leads to effective proton conduction and gas permeation characteristics in the electrode layer, which is attributed to the improvement of PEFC performance.

## Claims

1. A method for recovering an ionomer and a catalyst from a membrane electrode assembly, the method comprising the steps of:
a1) subjecting a membrane electrode assembly to supercritical dispersion in a mixed solvent of alcohol and water to extract an ionomer;
a2) filtering and separating the extracted ionomer dispersion liquid; and
a3) filtering and separating a catalyst from remaining components after the separation of the ionomer dispersion liquid.

2. The method of claim 1, wherein the membrane electrode assembly is a used membrane electrode assembly or a defective membrane electrode assembly.

3. The method of claim 2, wherein the used membrane electrode assembly is the membrane electrode assembly that has been used in a fuel cell or a water electrolysis device.

4. The method of claim 2, wherein the defective membrane electrode assembly is the membrane electrode assembly that has been determined to be defective due to incomplete application of an electrode or folding of a polymer electrolyte membrane during a production process.

5. The method of claim 1, wherein in the supercritical dispersion, a temperature is in a range of 100 to 350 °C, and a pressure is in a range of 1 to 17.0 MPa.

6. The method of claim 1, wherein the membrane electrode assembly includes a catalyst layer including an electrode binder and a catalyst formed on both sides of a separator having ion conductivity.

7. The method of claim 1, wherein the ionomer is at least one selected from a perfluorine-based ionomer, a partial fluorine-based ionomer, and a hydrocarbon-based ionomer.

8. The method of claim 1, wherein the catalyst is at least one selected from a metal catalyst, a metal oxide catalyst, a multi-component alloy catalyst, and a metal catalyst supported on a support.

9. The method of claim 1, wherein the ionomer dispersion liquid includes an oxidation stabilizer.

10. The method of claim 1, further comprising the step of treating the membrane electrode assembly with acid before the step a1) to remove impurity or treating the ionomer with acid after the step a2) to remove impurity.

11. A method for recovering an ionomer from an ion exchange membrane, the method comprising the steps of:
b1) subjecting an ion exchange membrane to supercritical dispersion in a mixed solvent of alcohol and water to extract an ionomer; and
b2) filtering and separating the extracted ionomer dispersion liquid.

12. The method of claim 11, wherein the ion exchange membrane is a used ion exchange membrane or a defective ion exchange membrane.

13. The method of claim 12, wherein the used ion exchange membrane is the ion exchange membrane that has been used in a fuel cell or a water electrolysis device.

14. The method of claim 12, wherein the defective ion exchange membrane is a product that has been determined to be defective due to partial impregnation of the ionomer or failure to control film thickness or failure to control drying and heat treatment processes during a production process.

15. The method of claim 11, wherein in the supercritical dispersion, a temperature is in a range of 100 to 350 °C, and a pressure is in a range of 1 to 17.0 MPa.

16. The method of claim 11, wherein the ionomer is at least one selected from a perfluorine-based ionomer, a partial fluorine-based ionomer, and a hydrocarbon-based ionomer.

17. The method of claim 11, wherein the ionomer dispersion liquid includes an oxidation stabilizer.

18. The method of claim 11, further comprising the step of treating the ion exchange membrane with acid before the step b1) to remove impurity or treating the ionomer with acid after the step b2) to remove impurity.

19. An ion exchange membrane manufactured using the ionomer recovered by the method of claim 1 or 11.

20. An electrode binder manufactured using the ionomer recovered by the method of claim 1 or 11.

21. A membrane electrode assembly manufactured using the catalyst recovered by the method of claim 1.

22. A membrane electrode assembly manufactured using the ionomer recovered by the method of claim 1 or 11.
